(19) Europäisches Patentamt
European Patent Office
Office européen des brevets

(11) **EP 3 831 035 B1**

(12) **EUROPÄISCHE PATENTSCHRIFT**

(45) Veröffentlichungstag und Bekanntmachung des Hinweises auf die Patenterteilung:
**22.01.2025 Patentblatt 2025/04**

(21) Anmeldenummer: **19745116.4**

(22) Anmeldetag: **24.07.2019**

(51) Internationale Patentklassifikation (IPC):
*H04L 67/12* (2022.01)  *G06F 9/50* (2006.01)
*G06F 16/25* (2019.01)  *H04L 67/56* (2022.01)
*H04L 67/561* (2022.01)  *H04L 67/568* (2022.01)

(52) Gemeinsame Patentklassifikation (CPC):
**H04L 67/12; G06F 9/5066; G06F 16/252;**
**H04L 67/56; H04L 67/561; H04L 67/568;**
H04L 67/1097

(86) Internationale Anmeldenummer:
**PCT/EP2019/069913**

(87) Internationale Veröffentlichungsnummer:
**WO 2020/025417 (06.02.2020 Gazette 2020/06)**

(54) **VERFAHREN UND ZWISCHENSPEICHEREINRICHTUNG FÜR MESSDATEN VON FAHRZEUGEN**

METHOD AND TEMPORARY STORAGE DEVICE FOR MEASUREMENT DATA OF VEHICLES ("DATA FILLING STATION")

PROCÉDÉ ET DISPOSITIF DE STOCKAGE INTERMÉDIAIRE DE DONNÉES DE MESURE DE VÉHICULES ('STATION RÉSERVOIR DE DONNÉES')

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2018 DE 102018118498**

(43) Veröffentlichungstag der Anmeldung:
**09.06.2021 Patentblatt 2021/23**

(73) Patentinhaber: **Deutsche Telekom AG**
**53113 Bonn (DE)**

(72) Erfinder: **JUNG, Christoph Georg**
**66564 Ottweiler (DE)**

(74) Vertreter: **Braun-Dullaeus Pannen Emmerling Patent- & Rechtsanwaltspartnerschaft mbB**
**Platz der Ideen 2**
**40476 Düsseldorf (DE)**

(56) Entgegenhaltungen:
**US-A1- 2010 115 246**

- **MUNSHI AMR A ET AL: "Cloud-based visual analytics for smart grids big data", 2016 IEEE POWER & ENERGY SOCIETY INNOVATIVE SMART GRID TECHNOLOGIES CONFERENCE (ISGT), IEEE, 6 September 2016 (2016-09-06), pages 1 - 5, XP033020107, DOI: 10.1109/ ISGT.2016.7781163**

EP 3 831 035 B1

## Beschreibung

Es ist ein Trend erkennbar, dass immer größere Datenmengen von Sensoren in Echtzeit maschinell erzeugt und auch möglichst schnell, umfassend und global ausgewertet werden sollen. Insbesondere im Zusammenhang mit automatisiertem Fahren, aber nicht hierauf beschränkt, ist zu erwarten, dass diese Tendenz weiter anhält bzw. sich gar überproportional verstärken wird.

So ist die Komplexität von Steuergeräten und lokalen Datenübertragungsbussen im Zuge der Digitalisierung und Autonomisierung von Kraftfahrzeugen, Flugzeugen, Schiffen und Produktionsanlagen in den letzten Jahren stärker gestiegen als die Bandbreite der globalen Kommunikationsnetze. Viele der in diesen Maschinen lokal erzeugten Nachrichtendetails und Messinformationen, auch als Messsignale oder als Messdaten bezeichnet, können daher, obwohl aus Sicherheits- und Wirtschaftlichkeitsgründen äußerst relevant, lediglich ausschnittsweise, periodisch aggregiert und/oder in lokalen Speichern vorgehalten werden. In diesem Zusammenhang werden Signale beispielsweise in den Diagnosespeichern der einzelnen Steuergeräte, einer Blackbox oder dedizierten Logger-Steuergeräten abgelegt. Sie sind somit zunächst einer "Echtzeit"-Verarbeitung durch eine fortgeschrittene cloud-basierte Intelligenz entzogen (Cloud = untereinander vernetzte, von mehreren Mandanten genutzte und daher sehr wirtschaftlich betriebene Rechenzentren). Es ist zu erwarten, dass der Ausbau verfügbarer Bandbreite auch auf absehbare Zeit nicht mit der steigenden Menge an Messdaten Schritt halten kann, so dass innovative Anwendungen/Analysen mit enormen Kostenhürden verbunden sind.

Um das vorliegende technische Gebiet besser beschreiben zu können, werden an geeigneten Textstellen mathematische Definition eingeführt und dann in der Folge zur Darstellung von Sachverhalten verwendet.

Betreffend die Aufzeichnung von digitalen Signalen wird definiert:
Sei $(T = \{t_1, t_2, ...\}, <)$ eine strenge Ordnung von diskreten Zeitpunkten, $C = \{C_1, C_2, ...\}$ eine Menge von Kanälen sowie $(M = \{m_1, m_2, ...\}, \dot{+}, \dot{0})$ ein Monoid von Nachrichten (wenn numerisch interpretiert: Werten). Eine Signalspur $S \subseteq C \times T \times M$ repräsentiert eine Menge von Signalen, so dass $\forall (c, t, m_i), (c, t, m_j) \in S \Rightarrow m_i = m_j$. Eine Signalspur stellt also eine partielle Funktion auf Kanälen und Zeitpunkten dar.

Der bevorzugte Weg, um Signalspuren aus komplexen Anlagen mit unterschiedlichsten Steuergeräten und Bus-Standards zu gewinnen, basiert auf dem Einsatz dedizierter multi-kanaliger Steuereinheiten, die als sogenannte Logger bezeichnet werden.

Die Logger leiten alle auf einem Nachrichtenbus anliegenden Signale - ein sogenanntes Sample $\sigma(t) = \{(c, t, m) \in S\}$ - an einen Speicher aus. Dies findet zu vorgegebenen Zeitpunkten statt, welche sich an der Taktfrequenz des jeweiligen Kommunikationskanals bzw. internen Zuständen (z.B. pro Motorumdrehung) orientieren. Im Speicher werden die Daten dauerhaft hinterlegt und können zu einem späteren Zeitpunkt ausgelesen werden. Der Logger kann die Speichereinheit umfassen oder aber mit der Speichereinheit in Datenverbindung stehen.

Der Aufbau eines solchen Loggers wird durch die Echtzeitanforderungen auf dem jeweiligen technischen Gebiet bestimmt. Weitere Faktoren können die Katastrophensicherheit sowie Kostengründe sein. Meist durchwandern die Samples zunächst einen kleinen Hauptspeicherbereich (zeitbeschränkter Ringspeicher), in dem sie je nach Signalart vortransformiert (z.B. logarithmisch projiziert) oder vorverdichtet (z.B. mehrkanalig transponiert) werden, bevor sie schließlich sequentiell auf einen stoßsicheren Langzeit-Speicher (EEPROM, Magnetband oder Solid-State-Disk - SSD) geschrieben werden. Den Vorgang, aus einem hochfrequenten Datenstrom niederfrequente Ausleitungen in Form von zusammenhängenden Datenblöcken anzustoßen, nennt man Flush.

Die mittels eines Loggers aufgezeichneten Informationen sind qualitativ und quantitativ den gängigen Methoden der Telematik-Überwachungen überlegen. Bei der Telematik-Überwachung werden mittels fest programmierter Gateway-Steuergeräte vordefinierte Ereignisse (=abstrakte Signale, welche durch Analyse/Beobachtung einzelner Quellsignale abgeleitet werden) über die jeweils aktuellen Mobilfunkstandards mit einer Leitstelle ausgetauscht. Telematik-Lösungen zur optimierten Ereignisverarbeitung sind jedoch nur partiell für die in dieser Erfindung zugrunde gelegten Rohsignale relevant, denn die oftmals dynamisch definierten Filterungen, Aggregationen und weitergehende Analysen, welche insbesondere beim automatisierten Fahren, in Ingenieurs- sowie Sicherheitskontexten anfallen, lassen sich nicht auf diese Weise vorprogrammieren.

Die durch den Logger aufgezeichneten Daten werden nachfolgend auch als Signal- oder Signalspurdaten bezeichnet. Diese Bezeichnungen sollen der Tatsache Rechnung tragen, dass verschiedene Sensoren und Bussysteme ihre jeweiligen Messdaten in "eigenen" Spuren bzw. Formaten an die Logger übermitteln. So erzeugen im Allgemeinen Steuergeräte eines Motors auf dem CAN-Bus Daten mit einem anderen Format als etwa Video- oder Umgebungs-Sensoren auf dem FlexRay-Bus. Diese Signalspuren/Formate weisen also i. allg. verschiedene Kodierungs- und Dekodierungscharakteristiken auf.

Je nach industriellem Umfeld und beeinflusst durch bestimmte Konzepte der Anlagen-, Komponenten- und Logger-Hersteller haben sich folgerichtig verschiedenste Formate für die Aufzeichnung und den Transport digitaler Signale und Messungen herauskristallisiert. Im Automotive Umfeld sind dies etwa das "Measurement Data Format" oder das "EB Assist Automotive Data and Time-Triggered Framework". Im Bereich der Internetkommunikation (Ethernet-Bus), welche neuerdings auch in modernen Fahrzeugen eingesetzt wird, spielt die "Packet Capture" Struktur eine dominante Rolle, für die auch eine Variante für die Automotive Branche existiert.

Diese Formate haben gemein, dass sie eine Optimierung des (jederzeit unterbrechbaren) Flush-Vorgangs unter Echtzeitbedingungen als Grundlage haben. Die aufeinanderfolgenden binären Datenblöcke, welche während des Flush-Vorgangs in den Langzeitspeicher geschrieben werden, folgen variablen, für die jeweils aufgezeichneten Kanäle/Sensoren angepassten und redundanzarmen Kodierungen. Insbesondere sind sie daher nicht als selbstbeschreibend vorgesehen.

Stattdessen sind die zur Dekodierung (im Folgenden auch Interpretation genannt) der Samples benötigten Informationen an anderen Stellen in der gespeicherten Datei untergebracht. Diese, für einen raschen Speichervorgang typischerweise unkritischen Stellen, können je nach Aufzeichnungsmethode und Instrumentierung des Loggers beliebig vor, nach, und gegebenenfalls auch mitten in den zu interpretierenden Binärinformationen liegen, manchmal werden Kodierungsanteile auch in einem separaten Signalkatalog des beobachteten Maschinenkomplexes vorausgesetzt.

Kompressionstechniken spielen in diesem Zusammenhang nur innerhalb der Datenblöcke eine Rolle und sind den Möglichkeiten der Logger-Hardware angepasst. Hierbei werden Lauflängenkodierung und Lempel-Ziv-Verfahren favorisiert. Es ist weiterhin zu erwarten, dass in Zukunft auf dieser Ebene der einzelnen (komprimierten) Datenblöcke auch Verschlüsselungsverfahren zum Einsatz kommen, da Signaldaten in der Regel sensible Informationen über die Anlagen aufweisen. Denn eine nachträgliche Kompression bereits verschlüsselter Informationen hat sich als unsicher und impraktikabel erwiesen.

In der Zusammenfassung bedeutet dies, dass die Einfachheit und Schnelligkeit der Aufzeichnung in diesen Formaten zulasten einer deutlich aufwändigeren Interpretation erreicht wird, die üblicherweise erst nach Übertragung der Messdaten auf einem zentralen Host-Rechner mit angeschlossenem Direktzugriffsspeicher (RAM, SSD) erfolgt. Der Direktzugriffsspeicher erlaubt es dabei, durch beliebige Vorwärts- und Rückwärtssprünge (Random Access) die miteinander verschachtelten Binärdaten und ihre zugehörigen Dekodier-Anweisungen in Einklang zu bringen. Dieser Ansatz wird allerdings durch eine minimierte Gesamtbandbreite des Hosts sowie erhöhte Latenz durch Sprünge und Hauptspeicherbedarfe, insbesondere zwischen den wenigen Prozessoren (CPU) und dem Direktzugriffsspeicher, limitiert.

Im Zusammenhang mit modernen Datei- und Netzwerksystemen wurden weitere Formate entwickelt, welche eine einfachere Interpretation erlauben, indem beispielsweise feste Kodierungen oder selbstbeschreibende Datenblockstrukturen verwendet werden, wie "CARMEN - Car Measurement Environment", "Extended Log File Format" oder "Hierarchical Data Format". Aus genannten Gründen spielen diese jedoch bei der zeitkritischen Aufzeichnung von Messdaten nahezu keine Rolle. Das bedeutet, dass man bei der notwendigen Wandlung der Aufzeichnungsformate in diese Zwischenformate um eine schon beschriebene, host-gebundene Transkodierung (hier: die Hintereinanderschaltung von Interpretation/Dekodierung, Transformation/Analyse gefolgt von einer Rekodierung in ein neues Zielformat) nicht herumkommt. Da diese Zwischenformate - im Gegensatz zu den nachstehend beschriebenen Big Data Ansätzen - darüber hinaus auch bei der effizienten Analyse der Signale nicht primär weiterhelfen, bleibt ihre Rolle derzeit auf die Langzeit-Archivierung in der Cloud beschränkt.

Um riesige, variabel strukturierte Datenmengen in skalierbaren Rechenumgebungen zu speichern und zu analysieren, werden seit einigen Jahren sogenannte Big-Data Verfahren sehr erfolgreich angewendet. Dabei wird eine Ausgangsdatei, beispielsweise ein sehr großer Text, von dem wir etwa die durchschnittliche Satzlänge pro Anfangsbuchstaben berechnen möchten, zunächst in möglichst gleich große Segmente an mehrere allgemeine Rechen-Einheiten aufgeteilt mittels einer Netzwerk-Operation, die wir auch Segmentierung oder (englisch auch: Map) bezeichnen. Diese Rechen-Einheiten mit wenigen CPUs, etwas RAM und sequentiell betriebenem Festplattenspeicher bilden in ihrem Zusammenschluss einen kostengünstigen, aber sehr leistungsfähigen Rechen-Cluster, indem sie daraufhin parallel und unabhängig zueinander arbeiten, z.B. um Satzenden und Anfangsbuchstaben beim Durchgang durch ihr jeweiliges Text-Segment zu identifizieren.

Die Voraussetzung hierbei ist allerdings, dass die Rechen-Einheiten zur Erzeugung von Teilergebnissen bereits alle Informationen zur Dekodierung der binären Ausgangsdaten besitzen, entweder als eine Konvention über den festen Zeichensatz oder auch als ein über das Netzwerk spontan initiierter, punktueller Austausch von fachlichen Informationen zwischen jeweils zwei Cluster-Einheiten, z.B. durch die Verschiebung von Satzenden, welche durch die technische Segmentierung des ursprünglichen Textes abgeschnitten wurden, an denjenigen Rechner, welcher auch den Satzanfang beherbergt und bearbeiten soll.

Die letztendliche Zusammenführung der Teilergebnisse über das Rechnernetz wird während einer folgenden "Shuffle"-Phase (manchmal auch: Reduce-Phase) angestrebt. Dabei werden die Teilergebnisse (hier: jedes Ereignis, welches eine gemessene Satzlänge mit einem bestimmten Anfangsbuchstaben identifiziert; der Anfangsbuchstabe wird als der sogenannte Shuffle-Key des Ereignisses bezeichnet) an zuvor festgelegte, für einen bestimmten Bereich von Shuffle-Keys zuständigen Einheiten des Rechnerverbundes publiziert und dort dann in logisch abgeschlossenen Segmente einer "virtuellen" Ergebnisdatei zusammengefasst. Virtuell bedeutet hier, dass der Zusammenhang der im Rechnernetz verteilten Ergebnissegmente (hier: Ausschnitte des Katalogs von Anfangsbuchstaben mit ihren durchschnittlichen Satzlängen) nur uneigentlich z.B. durch Namenskonventionen oder die Erstellung zentraler Indexdateien hergestellt wird.

Bei der Kodierung der Ergebnissegmente bzw. ihren Indexdateien werden meist wieder Textformate oder nachfolgend diskutierte relationalen Analyseformate verwendet, so dass sie sich wiederum unmittelbar als Ausgangspunkt weiterer Map-Shuffle Operationen und damit zur Erzeugung komplexer Analysen aus vergleichsweise simplen Einzelschritten wie der beschriebenen Durchschnittsbildung nutzen lassen.

Zum Verständnis dieses Zusammenhangs kann die Kenntnis beitragen, dass sich Transformationen bzw. die ihnen innewohnenden Algebraischen Operatoren in verteilten Systemen allgemein als Funktionen auf Relationen der Form $\triangle: P^{R1} \times ... \times P^{Rn} \rightarrow P^{R'}$ beschreiben lassen, wobei $P^R \subseteq \mathfrak{P}(R)$ die Menge der Partitionierungen von R darstellt, d.h. $\{P \in P^R \Rightarrow \forall r \in R \exists! R \supseteq pEP \text{ mit } r \in p\}$. Partitionen entsprechen dabei den einzelnen, im verteilten System repräsentierten Segmenten der Relation.

Mussten die ersten Generationen von Big-Data Systemen noch mit statischen Programmlogiken angesteuert werden, so lassen sich heutige Systeme dynamisch in algebraischen Abfragesprachen in der Tradition von "A Guide to the SQL standard: a users guide to the standard database language SQL, 1997" konfigurieren. Die vorgegebenen Analyse-Rezepte werden über eine ausgewählte Recheneinheit des Clusters (Treiber, engl. Driver) in einen Abarbeitungsplan (Graph) überführt, dessen Schritte (Knoten) an weitere Rechner (Arbeitseinheiten, engl. Worker) delegiert und parallelisiert umgesetzt werden. Diese Knoten setzen sich aus einem Satz von Basis-Operatoren (Operator = Implementierung einer mathematischen Operation, d.h. Funktion) zusammen, zu denen neben den schon beschriebenen "Map" und "Shuffle"-Operatoren auch speziellere Schritte wie die Filterung, den "Join", das Sortieren und die Aggregation von relationalen Datensätzen gehören.

Die volle Leistungsfähigkeit entfalten diese Ansätze im Zusammenhang mit dafür zugeschnittenen, relationalen Analyseformaten, wie z.B. "ORC - the smallest, fastest columnar storage for Hadoop workloads, 2018" oder "Parquet - Big Data Concepts, Theories, and Applications, 2016". Diese Formate verwenden u.a. schon erwähnte Kompressions- bzw. Kodierungsstrategien, um Speicherbedarfe und den analytischen Zugriff zu optimieren. Wegen ihrer Allgemeinheit kennen diese Ansätze zwar technische Redundanzen (mehrfaches Abspeichern von Dateisegmenten) zum Zwecke der Lastenverteilung und Ausfallsicherheit, jedoch keine logischen Redundanzen (hier: das mehrfache Speichern ausgesuchter Datensätze der Relation).

Bislang ist es noch nicht überzeugend gelungen, mobil und lokal erzeugte Signalspuraufzeichnungen mit großen Datenmengen, insbesondere im Gigabyte- oder Terabyte-Bereich, effektiv für solchen intelligenten Cluster-Verfahren zugänglich zu machen. Selbst wenn es möglich wäre, die Aufzeichnungsmedien der Logger-Einheiten breitbandig in die zentralen Cluster-Umgebungen einzubinden (eine im Engineering-Umfeld beliebte, aber hochlatente Herangehensweise ist der physikalische Transport z.B. von SSDs etwa auf dem Postweg, um sie dann in spezielle Netzwerk-Einschübe im Zielcluster zu stecken), handelt es sich bei den Ausgangsformaten der Messdaten, also der Signalspuraufzeichnungen, weder um textartige Dateien (mit fester Kodierung) noch um fest strukturierte Artefakte (mit einer an einer vorhersagbaren Stelle der Datei nachzulesenden Kodierung). Technisch segmentierte Signalspuraufzeichnungen sind daher nicht ohne weiteres parallel interpretierbar, daher wird in der Regel immer noch eine ineffiziente, host-basierte Vorabtranskodierung in die Big Data Analyseformate praktiziert.

Ein zweiter Nachteil dieses Ansatzes ist die Darstellung von Samples vordefinierter Kanäle $C=\{c_i\}$ als Relation $R=\{(t,\overline{m})=(t,m_1,...,m_n)|\forall(c_i,t,m_i)\in\sigma(t)\}$ sozusagen als einzige Spur von Nachrichten-Tupeln $\overline{M}$. Denn die relationalen Formate und deren algebraische Operatoren "wissen" in der Regel zu wenig über die Signaldomäne, insbesondere die zeitliche Ordnung < und die damit verbundenen Analysemethoden (Beispiel: Kalman-Filter (A New Approach to Linear Filtering and Prediction Problems, 1960)). Typischerweise führen solche statistischen Analysen iterativ Operationen auf allen Signalen eines dedizierten Kanals (Kanalspur, im Folgenden synonym mit Kanal verwendet) aus und erzeugen dabei neue, berechnete Kanäle:

- Filterung entfernt alle Signale, deren Nachrichten in einer passenden (lexikographischen) Ordnung < unterhalb/oberhalb einer Referenznachricht rangieren oder deren Zeitstempel vor/nach einer Referenzzeit in der zeitlichen Ordnung < liegt oder gar komplette Signalspuren irrelevanter Kanäle.

- Die Ableitung stellt zeitliche Nachrichtendifferenzen eines Kanals dar.

- Die Integration kumuliert Nachrichten über den Zeitverlauf eines Kanals. Weitere Kumulationen sind die Minimierung, die Maximierung sowie die Durchschnittsbildung von Signalspuren.

- Ereignisse beschreiben das (Nicht-) Vorhandensein von Nachrichten innerhalb eines Kanals als verknüpfbare, boolesche Nachrichten aus ($M_b=\{w,f\},\&,f)$.

- Resampling ist die im Sinne der zeitlichen Ordnung gestauchte oder gestreckte Betrachtung eines Kanals. Ebenso lassen sich Signalspuren zeitlich verschieben.

- Eine weitere wesentliche Gruppe von Operationen, sogenannte Kombinationen (die zugehörigen Operatoren wollen wir im folgenden Kombinatoren nennen), umfasst dabei die Konkatenation und Differenzbildung von mehreren Signalen und Kanälen, die jeweils passend zu den jeweiligen Nachrichten-Operationen $\dot{+}$ (entsprechend: $\dot{-}$) definiert werden. In numerischen Domänen gibt es darüber hinaus auch Produkte, Division und Potenzen als Kombinationen. In booleschen Domänen lassen sich Konjunktion, Disjunktion oder Negation analog dazu definieren.

In den allgemeinen Analyseformaten werden nun Samples unterschiedlicher Frequenz und Kanalzusammensetzungen (entsprechend der aufgezeichneten Kommunikationsbusse/Formate) auch in separaten Segmenten vorgehalten. Die Kombination von relationalen Spuren $R_i$ erfolgt über Upsampling $U$ auf einer gegebenen Interpolationsroutine $\Phi$ (so dass sich alle Spuren so verhalten, als wären sie mit der höchsten Frequenz aufgezeichnet worden) mit einem folgenden Join $J$ (um die Spuren unterschiedlicher Formate miteinander zu kombinieren).

-

$$\Phi: T \ x \ T \ x \ \overline{M} \ x \ \overline{M} \to \overline{M}$$

- $U_{T' \supseteq T}(R) = \{(t', \Phi(t_1, t_2, \overline{m_1}, \overline{m_2})) | t_1 \leq t' \leq t_2 \text{ minimal, so dass } (t_1, \overline{m_1}), (t_2, \overline{m_2}) \in R\}$

-

$$\tilde{J}(R_1, \ldots, R_n) = \{(t, \overline{m}_1, \ldots, \overline{m}_i) | (t, \overline{m}_i) \in U_{\cup Ti}(R_i)\}$$

-

$$J: P^{R_1} \times \ldots \times P^{R_n} \to \cup \tilde{J}(P_{1i}, \ldots, P_{nj})$$

Dieser wesentliche Operator hat - selbst bei fortgeschrittenen Implementierung mittels Partition-Pruning (die frühzeitige Eliminierung von nicht benötigten, da zeitlich divergierenden Partitionen) und Merge-Sort (die zu kombinierenden Relationen werden zunächst nach einem Vergleichsschlüssel, etwa hier: dem Zeitstempel, umsortiert, um Interaktionen zwischen den Segmenteinheiten zu reduzieren) - eine multiplikative Komplexität und bedarf der Zwischenspeicherung und Re-Partitionierung (sprich: einer Re-Segmentierung inklusive Netzwerkkommunikation).

Ein dritter Nachteil der "klassischen" Big Data Signalverarbeitung zeigt sich, wenn ein Ingenieur mit seinen gewohnten Werkzeugen die Ergebnisse der Analyse weiterbearbeiten will, z.B. um die abgeleiteten Signalspuren in einem Hardware-In-The-Loop Simulator (Elektronik in der Fahrzeugtechnik, 2010) abzuspielen. Diese Werkzeuge können mit den verteilten Analyseformaten in der Regel nichts anfangen. Der Einfachheit halber greift man daher wiederum auf host-basierte, sequenzielle Transkodierungsprozesse zurück, welche die Segmente zunächst in einen zentralen Direktzugriffsspeicher überspielen, bevor Sie letztendlich in die Domänenformate z.B. des Automotive Sektors wieder umgeschrieben werden können.

A. A. Munshi and Y. A. I. Mohamed, "Cloud-based visual analytics for smart grids big data," 2016 IEEE Power & Energy Society Innovative Smart Grid Technologies Conference (ISGT), Minneapolis, MN, USA, 2016, pp. 1-5, doi: 10.1109/ISGT.2016.7781163 beschreibt, dass intelligente Zähler eine Schlüsseltechnologie für die Übertragung von Informationen zwischen Dienstleistern und Endnutzern sind. Die riesigen Datenmengen, die von intelligenten Stromzählern zur Visualisierung und Steuerung erzeugt werden, müssen jedoch ausreichend verwaltet werden, um die Zuverlässigkeit und Nachhaltigkeit des intelligenten Stromnetzes zu erhöhen. Interessanterweise können intelligente Stromnetze als eine Big-Data-Herausforderung betrachtet werden, die mit riesigen Datenmengen und deren Analyse zu tun hat. Daher erfordern diese noch nie dagewesenen Smart-Grid-Daten eine effektive Plattform, die das Smart Grid in das Big-Data-Zeitalter hebt. In diesem Beitrag wird ein visuelles Analysesystem vorgestellt, das die Nachhaltigkeit des intelligenten Stromnetzes fördern kann. Eine Anwendung des Frameworks wurde auf ein Smart Grid mit über 6.000 intelligenten Zählern zur Visualisierung der dynamischen Nachfragesteuerung angewandt. Darüber hinaus wird eine weitere Anwendung auf Daten vorgestellt, die Mikro-Generatoren einschließlich eines Elektrofahrzeugs umfassen. Die Ergebnisse deuten darauf hin, dass das Framework für die Durchführung visueller Analysen und weiterer Analysen von Smart-Grid-Daten geeignet ist.

Es ist demnach die Aufgabe der Erfindung, ein Verfahren sowie eine Einrichtung bereitzustellen, die es ermöglichen Messdaten von der Größe mehrere Gigabyte, Terabyte und/oder Petabyte, zwischenzuspeichern und effizient auszuwerten. Diese Aufgabe wird gelöst mit den Merkmalen der unabhängigen Ansprüche.

Erfindungsgemäß ist ein Verfahren zur Verarbeitung von Messdaten mittels einer Rechnereinheitenanordnung angegeben, wobei die Messdaten insbesondere beim Betreiben von Fahrzeugen generiert werden. Zumindest eine Anzahl von drei Rechnereinheiten (vorzugsweise mit jeweils eigener CPU, indizierendem Direktzugriffsspeicher sowie sequentiellem Langzeitspeicher) ist hierzu vorgesehen, wobei die Rechnereinheiten mittels zumindest eines Schalters miteinander in einer Datenverbindung (z.B. Kommunikationsverbindung - Local Area Network - LAN, etwa: Ethernet) stehen. Eine der Rechnereinheiten übt als Treiber ("Driver") eine Steuerfunktion aus, wobei die zumindest zwei anderen Rechnereinheiten als Arbeitseinheiten ("Worker") arbeiten. Die Messdaten werden der Rechnereinheitenanordnung über einen Datenstrom zur Verfügung gestellt, wobei die Messdaten in der Regel unterschiedliche Datenformate aufweisen. Insbesondere können dynamische Transkodier-Anfragen und die Übertragung der abstrakten Ergebnisse (z.B. Ereignisse) von der regional stationierbaren Rechnereinheitenanordnung als Dienst über ein globales (mobiles) Kommunikationsnetzwerk (allg.: Internet) bereitgestellt werden.

Der Kern der Erfindung ist nunmehr, dass der Treiber die Messdaten zunächst hinsichtlich ihrer unterschiedlichen, insbesondere variablen, Datenformate analysiert ("Sprung-Scan") und dadurch Struktur- und/oder Format-Informationen über diese Messdaten extrahiert. Aus diesen Struktur- und/oder Format-Informationen erstellt der Treiber einen Abarbeitungs- und/oder Speicherplan der Messdaten, insbesondere in der Form einer Tabelle. Dieser Abarbeitungsplan ist im Hinblick auf die unterschiedlichen Datenformate optimiert, denn er teilt die Messdaten in einen weiteren Schritt in fachlich geeignete Segmente auf, welche den Arbeitseinheiten zur parallelen Abarbeitung, insbesondere zur Dekodierung, zugewiesen werden. Zu diesem Zweck können sich Segmente technisch überschneiden, d.h. sie stellen keine reinen Partitionen dar, sondern Multi-Mengen. Insbesondere kann ein Teil einer Ursprungsdatei somit gleich mehreren Workern, aber mit jeweils unterschiedlichem Interpretationsfokus zugewiesen werden. Die fachliche Einteilung von Messdaten und Interpretationsschwerpunkten erfolgt dabei insbesondere bezüglich gemeinsam zu analysierender Kanalgruppen und/oder Zeitperioden.

Durch dieses Verfahren und eine entsprechend gewählte Anzahl von Worker-Einheiten ist eine effiziente, rasche Übertragung und Analyse der Messdaten aus den lokalen Fahrzeugen auch im Terabyte-Bereich oder größer in wenigen Minuten möglich. Denn ursprünglich können die zunächst noch unbekannten Messdaten nicht auf einfache Art und Weise segmentiert und unabhängig abgearbeitet werden, da die so entstehenden Segmente unterschiedliche Dateiformate mit jeweils eigenen und verstreuten Dekodierungsinformationen aufweisen. Zudem erweist es sich als ineffizient und fehleranfällig, Messdaten, die aus einer bestimmten Quelle kommen, also beispielsweise von einem bestimmten Sensor zu verschiedenen Zeitperioden erhoben wurden, in verschiedene Segmente zu fragmentieren, nur weil sie aus Aufzeichnungsgründen an verschiedenen Stellen der Logger-Datei gespeichert wurden. Indem erfindungsgemäß aber zunächst lediglich in einem schnellen Sprung-Scan die Struktur- und/oder Format-Informationen analysiert werden, kann hieraus der Abarbeitungsplan erstellt werden, in welchem die Segmente so optimiert werden, dass sie beispielsweise lediglich Signalspuren einer einzigen vorbestimmten Quelle mit einem definierten Datenformat aufweisen. Denn nur weitestgehend fachlich und technisch unabhängige Segmente können von den Arbeitseinheiten effizient parallel abgearbeitet werden.

Die Erfindung umfasst allerdings auch den Fall, dass ein Segment unterschiedliche Dateiformate logisch und zeitlich zusammengehöriger Sensoren/Quellen aufweisen kann, welche in einem späteren Analysezusammenhang stehen (Kanalgruppe). In jedem Fall ist der Abarbeitungsplan so zu erstellen, dass die nachfolgende parallele Abarbeitung durch die Arbeitseinheiten möglichst schnell, effizient und koordiniert verlaufen kann.

Bevorzugt weist der Abarbeitungsplan daher die während des Sprung-Scan gewonnenen Struktur- und/oder Format-Informationen der jeweiligen Segmente auf und stellt diese den Arbeitseinheiten zur Verfügung. Diese Struktur- und/oder Format-Informationen beinhalten auch alle Anweisungen, also insbesondere Dekodier-Informationen, die die Arbeitseinheiten benötigen, um die Segmente abzuarbeiten. Dies ermöglicht ein effizientes Abarbeiten der Segmente, da die einzelnen Arbeitseinheiten die Dekodier-Informationen nicht jedes Mal über das Netzwerk anfragen oder gar über die Datenverbindung aus der Messdatei lesen müssen, womit der sequentielle Übertragungsprozess gestört würde. Stattdessen werden sie aus dem im Hauptspeicher vorgehaltenen Abarbeitungsplan zugegriffen.

Zweckmäßigerweise führt der Treiber bei, insbesondere wechselnden, Formaten der Messdaten, bei denen sich die Längen nachfolgender Datenblöcke bereits bekannter Struktur vorhersagen lassen, einen Sprung-Scan aus, wobei der Sprung-Scan Bytes des Datenstroms überspringt, die innerhalb der prognostizierten Länge liegen. Dies ermöglicht, dass die Voranalyse der Originaldatei bzw. der Messdaten bezüglich ihrer Struktur- und/oder Format-Informationen trotz der zugrundeliegenden Datenvolumen sehr effizient und rasch von statten geht, da die Nutzdaten, die zwischen diesen Sprüngen bzw. Strukturdaten liegen, überhaupt nicht übertragen werden. D.h. der Sprung-Scan kann sehr effizient mit sequenziellen Speichern umgesetzt werden. Ist eine Vorhersage der folgenden Nutzdatenstruktur nur bedingt möglich ("Heuristik"), so lassen sich die Formatwechsel durch eine Kombination von Vorwärts- mit möglichst wenigen Rückwärtssprüngen im Rahmen eines iterativen Suchverfahrens mit nur geringen Nachteilen bzgl. der sequentiellen Speicheransteuerung eingrenzen.

Die von den Arbeitseinheiten verarbeiteten interpretierten Datensegmente weisen also einen oder mehrere Datenkanäle auf, wobei jeder Nachricht bzw. jedem Ereignis/Signal einer dieser Datenkanäle ein Zeitstempel zugeordnet ist. Dies ermöglicht eine Analyse im Hinblick darauf, wann ein bestimmter Sensor ein bestimmtes Ereignis detektiert hat.

Bevorzugt werden die verarbeiteten Datensegmente informationserhaltend in ihrer Größe reduziert, hier durch adaptives Downsampling. Dies wird dadurch realisiert, indem jede Arbeitseinheit nur Änderungen von Nachrichteninhalten inklusive der zugeordneten Zeitstempel/Perioden als komprimierte, sequentielle Segmentdatei lokal zwischenspeichert. Vor allem bei Messdaten von Fahrzeugen ergibt sich hierbei ein hohes Einsparungspotenzial. Dies ist der Tatsache geschuldet, dass die Nachrichten in den Datenkanälen, wie z.B. der erfasste Öldruck, oft über einen längeren Betrachtungszeitraum (mehrere Motorumdrehungen bei steigender Geschwindigkeit) einen konstanten Wert annehmen. Wird das Datenformat nun so angepasst, dass nur Änderungen dieser Werte erfasst werden, folgt eine effiziente Reduktion der Dateigröße unter Beibehaltung der chronologischen Sortierung. In praktischen Anwendungen konnten hier Kompressionsgrade auf bis zu 10% der Aufzeichnungsformate erreicht werden, abhängig vom Aufzeichnungsformat und der Änderungsfrequenz der Signale. Selbst mit den stärksten Kompressionsmethoden von Aufzeichnungsformaten kann das in dieser Erfindung beschriebene Zwischenspeicherformat konkurrieren, behält jedoch gleichzeitig die Eigenschaften der vollen Informationserhaltung, der Segmentierbarkeit und der parallelen Analysierbarkeit bei.

Bevorzugt erhält der Treiber von den Arbeitseinheiten als Antwort auf seine Interpretationsanfrage ein Verzeichnis der komprimierten Zwischensegmente, der darin beschriebenen Zeitintervalle und weiterer Nachrichten-Statistiken (kleinste und größte Nachrichten; Anzahl der Signale; durchschnittliche Sample-Rate, Ersetzung häufig vorkommender Nachrichten durch platzsparende Platzhalter, ...), so dass er daraus eine komplette Übersicht (Indexdatei) über die interpretierte, nunmehr virtuelle, da verteilte Messdatei erstellen kann.

So kann er in der Folge die Arbeitseinheiten auch anweisen, gezielt Informationen an den kanal- und zeitbedingten Nahtstellen der Segmente auszutauschen (zeit- und kanalbasierter Shuffle), um eine spätere effektive Auswertung ohne weitere Kommunikationsaufwände zu erreichen. Er kann so auch erreichen, dass die fachlich wichtigsten Segmente nicht nur chronologisch sortiert, sondern ggfs. auch unmittelbar im Hauptspeicher der Arbeitseinheiten vorgehalten werden, um eine spätere Analyse zu beschleunigen. Bevorzugt können also mittels der Indexdatei einzelne Kanäle von Sensoren und deren Signalspuren über die Ressourcen des verteilten Systems miteinander in Bezug gesetzt werden. Die Indexdatei bzw. die darin verwiesenen komprimierten und chronologisch sortierten Segmentdateien (im Folgenden auch "virtuelle Analysedatei" genannt) als Ergebnis des Interpretationsstadiums (der erste Modus "mobile Betankung" der Erfindung) stellt also eine optimale Basis für weitere Analysen und Transformationen dar (der zweite Modus "online Transformation und (Re-)Synthese" der Erfindung).

Vorzugsweise werden Informationen der virtuellen Analysedatei ausgewertet, indem auf den Kanälen die schon dargestellten Filterungs-, Kombinations-, Ableitungs-, und/oder Integrationsoperationen unter Anwendung von logischen Bedingungen ausgeführt werden. Dies ermöglicht, dass z.B. Ingenieure über das Internet deklarative Anfragen ("Transformations-Rezepte") an die interpretierte Messdatei bzw. einen Treiber-Rechner stellen können. So kann beispielsweise die Anfrage, zu welchen Zeitpunkten die Werte des Kanals 1 über dem Wert X1 und die Werte des Kanals 2 zugleich unterhalb des Wert X2 liegen, als Signalspur eines neuen, abgeleiteten (booleschen) Kanals aus den komprimierten Nachrichtenänderungssignalen iterativ und pro Segment/zuständiger Arbeitseinheit ermittelt werden. Diese Einzel-Operationen werden als Operator-Knoten in einem vom Treiber aufgrund der Indexdatei per konkreten Analyseplan initiierten, parallelen Analyse-Prozess berechnet. Die Einzelergebnisse (basierend auf Segmenten aus den abstrakten Signal-Änderungen im Wahrheitswert der skizzierten booleschen Bedingung) werden bevorzugt in den Speichern der beteiligten SPDs als "virtuelle Messdatei" zwischengespeichert, um schließlich - vermittelt über den Treiber und das SAN - zum Auftraggeber als Datenstrom übertragen zu werden. Wir werden diese effizienten Operationen, welche auf derart segmentierten Signaländerungen statt auf Signalen operieren und deren Komplexität damit niedriger als die schon beschriebenen, multiplikativen Verfahren ist, weiter unten näher beleuchten.

Gemäß einem weiteren Aspekt der Erfindung ist die (mobile) Zwischenspeichereinrichtung (Signal Processing Cluster- SPC) zur Durchführung der vorstehend beschriebenen Verfahren angegeben. Die Zwischenspeichereinrichtung weist eine erste Schnittstelle (SAN) für eine - nur temporär während eines Wartungsvorgangs - geschaltete Datenleitung zu jeweils einem Fahrzeug auf, in dem die Messdaten generiert werden, wobei diese Messdaten über die erste Schnittstelle von dem Fahrzeug an die Zwischenspeichereinrichtung sequentiell und mit einer sehr hohen Bandbreite bevorzugt über eine kabelgebundene Realisierung übertragen werden. Ferner weist die Zwischenspeichereinrichtung eine Rechnereinheitenanordnung auf, welche die Messdaten unmittelbar nach Anschluss an die erste Schnittstelle interpretiert und/oder gemäß einer Anfrage, insbesondere eines Cloud-Dienstleisters, welche auf einer zweiten Schnittstelle (Internet) übermittelt wird, aufbereitet. Diese zweite Schnittstelle ist für eine zweite Datenleitung zu einem öffentlichen oder privaten Cloud-Netzwerk vorgesehen, wobei die analysierten Messdaten bzw. die Ergebnisse der über diese Schnittstelle formulierten Transformations-Anfragen an die zwischengespeicherten Messdaten über die zweite Datenleitung weitergeleitet werden. Diese Datenleitung ist als permanent, jedoch je nach Situation von unterschiedlicher und moderater (im Verhältnis zur ersten Schnittstelle) Bandbreite anzusehen.

Schließlich ist vorzugsweise auch eine permanente Datenverbindung (Intranet) zwischen den Einheiten der Zwischenspeichereinrichtung vorgesehen.

Die "Betankung" erfolgt in physischer Nähe zu der regional aufstellbaren Zwischenspeichereinrichtung. So können regelmäßige Wartungsoperationen oder auch ein regulärer Tankvorgang genutzt werden, um die Messdaten eines Fahrzeugs effektiv in der zu diesem Zwecke mobilen Zwischenspeichereinrichtung zu puffern. Die Zwischenspeichereinrichtung schließt dabei die technische Lücke, die vorhanden ist, da weltweit operierende Fahrzeuge pro Fahrstunde in Zukunft mehrere Terabytes an lokalen Daten produzieren, diese Daten aber nicht kostengünstig über bestehende Netze an einen zentralen Server zur Weiterbearbeitung übertragen werden können. Herkömmlich können die Daten daher nur ausschnittsweise gespeichert und übertragen werden, beispielsweise in dem sich der Ringspeicher in den Fahrzeugen beständig selbst überschreibt, was zu einem Informations- und Datenverlust führt.

Bevorzugt kann die erste Datenleitung als eine hochfrequente, typischerweise aufgrund von Interferenzen nur auf wenige Meter Übertragungsweg beschränkte Kabel-Verbindung wie z.B. Fiber-Channel realisiert werden. Die zweite äußere Datenleitung besitzt LAN bzw. WIFI Verbindungen. Ist die breitbandigere LAN Verbindung aktiv, so wird sie präferiert. Steht aufgrund des aktuellen Standorts der mobilen Einheit beispielsweise in der Betankungsphase kein LAN zur Verfügung, so wird auf die WIFI Verbindung umgeschaltet und einige bandbreitenabhängige Dienstmerkmale (z.B. die Größe der generierten virtuellen Messdateien) der Einheit werden eingeschränkt.

Der WIFI Modus dient insbesondere zweierlei Zwecken. Er kann situativ vorgesehen sein, wenn nur kleinere, aber umso kritischere Datenmengen aus der Zwischenspeichereinrichtung in die Cloud zu übertragen sind, beispielsweise das Auftreten von Anomalien einzelner, gemessener Sensoren. Allerdings kann es auch bei der Interpretation der Messdaten durch die Recheneinheitenanordnung vorkommen, dass den Arbeitseinheiten etwa aus Sicherheitsgründen notwendige Kodierungsinformationen bzw. De-Kodierungsinformationen fehlen (etwa im Falle von verschlüsselten Messdaten) und diese temporär zugänglich gemacht werden müssen (etwa über einen Einmalschlüssel oder einen fahrzeugspezifischen Nachrichtenkatalog). Diese Aufgabe übernimmt der Treiber bei der Erstellung des Abarbeitungsplans und kann dazu über die zweite Datenleitung die notwendigen Informationen von assoziierten Sicherheits- und Katalogdiensten erfragen.

Im Folgenden werden bevorzugte Ausführungsbeispiele der vorliegenden Erfindung unter Bezugnahme auf die begleitende Figur erläutert:

Fig. 1: zeigt die erfindungsgemäße Zwischenspeichereinrichtung für Messdaten, insbesondere eines Fahrzeugs.

Fig. 1b: zeigt den Detailaufbau einer einzelnen Recheneinheit der Zwischenspeichereinrichtung für Messdaten.

Fig. 2: zeigt einen ersten Arbeitsmodus der Zwischenspeichereinrichtung aus Fig. 1 zur mobilen Betankung und Interpretation der Messdaten.

Fig. 3: zeigt eine Voranalyse der Messdaten zur Erzeugung eines Abarbeitungsplans.

Fig. 3b: zeigt die verschachtelte Binär-Struktur einer Messdatei inkl. Formatwechsel aus der Praxis im Measurement Data Format (MDF).

Fig. 4: zeigt die parallele Interpretation und Erzeugung eines neuartigen, komprimierten Signal-Zwischenspeicherformats ("virtuelle Analysedatei").

Fig. 5: zeigt den zweiten Arbeitsmodus der Zwischenspeichereinrichtung auf Fig. 1, auch als online Transformation und (Re-)Synthese bezeichnet, der die zwischengespeicherten Messdaten für einen Klienten aufbereitet.

Fig. 6: zeigt die iterative Analyse bzw. die Transformation der komprimierten Signal-Daten anhand eines Beispiels.

Fig. 7: illustriert den Abschluss und die Ausgabe eines (Re-)Synthese Auftrags, welcher erfindungsgemäß verarbeitet wird.

Fig. 8: demonstriert einen Anwendungsfall der Erfindung bzw. das Zusammenspiel mehrerer regionaler Zwischenspeichereinrichtungen bei der interaktiven Analyse weltweit verteilter Vorserien-Tests von Fahrzeugen.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

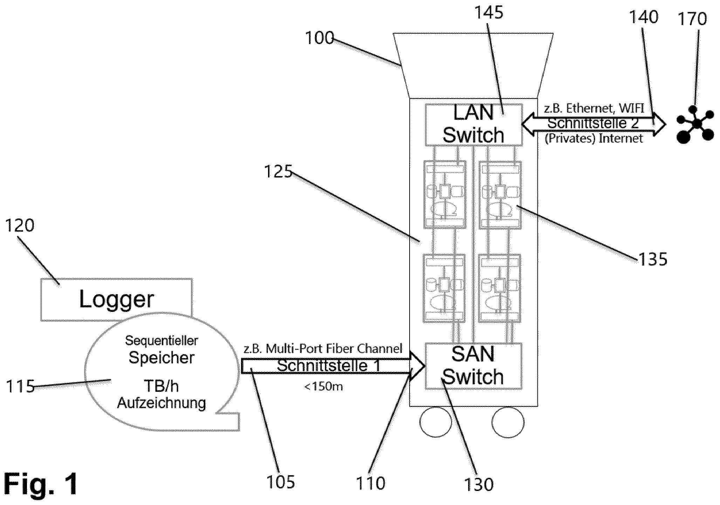

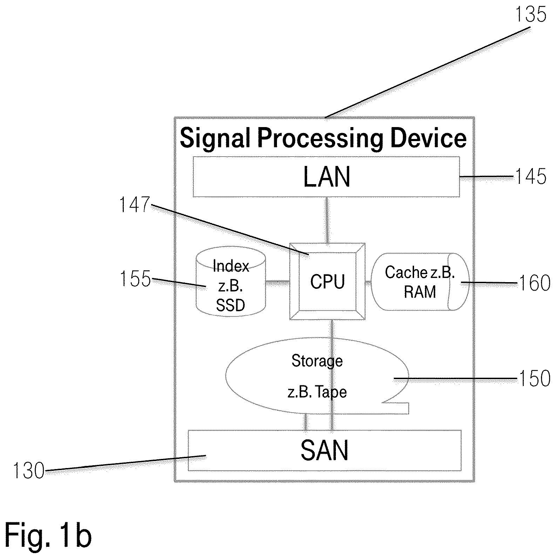

Fig. 1 zeigt die erfindungsgemäße Zwischenspeichereinrichtung 100 für Messdaten, insbesondere eines Fahrzeugs. Diese Zwischenspeichereinrichtung 100 kann gewissermaßen als "Datentankstelle" bezeichnet werden, wobei im Gegensatz zu einer herkömmlichen Tankstelle in diesem Fall "etwas" von dem Fahrzeug generiert und geliefert wird. Der Begriff Datentankstelle soll insofern lediglich verdeutlichen, dass das Fahrzeug insbesondere beim "Betanken" mit Strom oder Benzin oder während eines Wartungsvorgangs, die in ihm generierten Messdaten in die Zwischenspeichereinrichtung 100 transferiert und dann zügig und ohne Datenverlust aufgrund von Speichereinschränkungen weiterbetrieben werden kann. Von der Erfindung sind aber jedenfalls auch andere Zwischenspeichereinrichtungen 100 umfasst, an die das Fahrzeug fahren kann oder die zu dem Fahrzeug gebracht werden können. Wesentlich ist hierbei allerdings die Idee, dass die Zwischenspeichereinrichtung 100 so nahe an das Fahrzeug hereingebracht werden kann, dass eine erste Datenleitung 105, insbesondere eine durch Multi-Port Fiber Channel oder andere serielle Verbindungen realisierte Datenleitung 105, zwischen dem Fahrzeug und der Zwischenspeichereinrichtung 100 ausgebildet ist, sodass über eine gemeinsame erste Schnittstelle 110 Messdaten aus dem sequenziellen Speicher 115 des Fahrzeugs, welche durch den Logger 120 beschrieben wurde, an eine Rechnereinheitenanordnung 125 mit sehr hoher Datenrate, insbesondere im Bereich von mehreren Terabyte während eines mehrminütigen Wartungsvorgangs, übertragen werden können.

Die Zwischenspeichereinrichtung 100 ist eine neuartige Kombination von Hardware und darauf operierenden, nachstehend zu beschreibenden, Datenverarbeitungsverfahren, die eine technische Lücke bei der lokalen Interpretation und Zwischenspeicherung sowie der globalen, dynamischen Transformation und (Re-)Synthese von detaillierten Signalspurdaten schließt. Vorzugsweise sind die Messdaten aus solchen Signalspuren aufgebaut bzw. umfassen diese. Dynamisch bedeutet hier, dass die Art und der Schwerpunkt der Transformationsanfragen z.B. zur Erkennung von Ereignissen aus bestimmten Signalen, nicht im Voraus bekannt sind, sondern sich durch geschäftliche und wirtschaftliche Motivationen im laufenden Betrieb ändern.

Die Neuheit der Hardware betrifft also insbesondere eine halbstationäre, skalierbare Kombination moderner Netzwerk- und Speichernetzwerktechnologien gepaart mit sequenziellen Signalverarbeitungseinheiten, welche nachstehend im Detail beschrieben wird. Im Folgenden werden die Speichernetzwerktechnologien auch als SAN (Storage Area Network) bezeichnet. Die Neuheit der Verarbeitungsmethoden der Messdaten betrifft zwei Betriebsmodi der Zwischenspeichereinrichtung 100.

Der erste Modus, welcher nachstehend beschrieben wird, kann als "mobile Datenbetankung" der Zwischenspeichereinrichtung 100 bezeichnet werden und ist durch eine einzigartige, verteilte Interpretation der in den Messdaten aufgezeichneten Signalspuren mit einem hochoptimierten Signalanalyse-Format gekennzeichnet.

Der zweite Modus, welcher ebenfalls nachstehend beschrieben wird, kann als "online Transformation und (Re-) Synthese" bezeichnet werden, wobei eine neu entwickelte Verfeinerungssprache zum Einsatz kommt, deren zeitperiodenassoziative Operatoren unabhängige Teile eines virtuellen Signalausgabestroms berechnen und welche hierbei von dem zwischengespeicherten Signalanalyse-Format profitieren.

Fig. 1 zeigt, dass der Anschluss an den Logger 120 bzw. den sequenziellen Speicher 115 der aufzeichnenden Anlage bzw. des Fahrzeugs über einen Multi-Port SAN. Ein "Fiber-Channel 128 GFC128" kann bis zu 100 m bei einer "Roh"-Übertragungsrate von 128GBit/s überbrücken. Hieraus folgt für eine einkanalige Datenübertragung von einem komplett vermessenen Fahrzeug auf die Zwischenspeichereinrichtung 100, dass die Messdaten einer Fahrstunde (ca. ein Terabyte) in ungefähr 1 Minute übertragen werden können. Je nach eingesetzter Anlage und Logger-Speicher können auch geringere Bandbreiten oder multikanalige Anbindungen realisiert werden. Über einen Schalter 130, auch als Switch 130 bezeichnet, wird jede Rechnereinheit 135 mit dem Logger 120 im Port-to-Port Modus verbunden, d.h. jede Rechnereinheit besitzt ein eigenes Datenstrom-Fenster in die erhobenen Messdaten. Im Folgenden werden die Rechnereinheiten 135 auch als Signal Processing Devices 135, als SPD abgekürzt, bezeichnet.

Die Verbindung zu einem zentralen Server bzw. zu einer globalen Cloud 170 erfolgt über eine zweite Schnittstelle für eine zweite Datenleitung 140. Diese LAN-Verbindung kann sowohl über WIFI, insbesondere für kurze Rückfragen bei globalen Diensten während der mobilen Betankung, und/oder über eine Internetfähige Standleitung (mehrere Gigabit pro Sekunde im stationären Onlinemodus) realisiert sein. Dies wird über einen LAN-Switch 145 gemakelt bzw. realisiert, der die Rechnereinheiten 135 auch untereinander verbindet.

Je nach Einsatzdomäne sind in der Zwischenspeichereinrichtung 100 mindestens zwei Rechnereinheiten an die Switches 130, 145 gekoppelt. Der entstehende Signal Processing Cluster SPC 125 besteht also aus einer nahezu beliebigen Anzahl von SPDs 135, die gemäß Fig. 1b mit eigenen CPUs 147 ausgestattet sind. Der eigentliche Signaldatenspeicher 150 der Rechnereinheiten 135 ist ein günstiger sequenzieller Speicher, beispielsweise ein Magnetband oder eine Festplatte. Alle Inhaltsangaben und Statistiken über den Signaldatenspeicher sowie Zwischenergebnisse (Spuldateien) liegen auf einem schnellen, kleinen Direktzugriffspeicher, bspw. einer SSD 155. Der minimale Hauptspeicher 160 dient als Sample-Cache und orientiert sich an der typischen Blockgröße (Anzahl der Kanäle, Anzahl der Kanalgruppen, Größe der Analysezeitfenster) der geloggten Daten der Einsatzdomäne. Im dargestellten Fall sind die vier Rechnereinheiten 125 nicht redundant ausgelegt. Eine zusätzliche Ausfallsicherung kann durch mehrfache Speicherung der Datensegmente und ein geeignetes Koordinationsprotokoll erreicht werden.

Die Zwischenspeichereinrichtung 100 kann sich bevorzugt simultan in beiden Modi befinden, insofern die Kapazitäten der beschriebenen Rechen- und Netzwerkeinheiten dazu ausreichen. Ansonsten kann ein Wechsel der Betriebsmodi bei den folgenden Ereignissen stattfinden: Werden bestimmte SAN-Ports verbunden, so schaltet der Apparat in den ersten Modus "mobile Betankung". Bei einem Abbruch der Verbindung wird der erste Modus ausgeschaltet. Die Zwischenspeichereinrichtung 100 wechselt in den zweiten Modus "Online Transformation und (Re-) Synthese", wenn die zweite Datenleitung 140 über die Standleitung durch eine Anfrage aktiviert wird. Bei einem Abbruch dieser Verbindung wird der zweite Modus deaktiviert.

Unter einem Einschalten des Modus ist zu verstehen, dass alle SPDs das jeweilige Ereignis vom LAN-Switch 145 oder vom SAN-Switch 130 erhalten (Broadcast). Daraufhin wird ein Koordinationsprotokoll aktiviert, welches eines der SPDs 135 als Treiber "Driver") identifiziert. Je nach Modus delegiert der Treiber die Aufgaben bzw. die zu realisierende Funktion mithilfe der restlichen SPDs 135, welche damit als Arbeitseinheiten ("Worker") fungieren.

Unter einem Ausschalten des Modus ist zu verstehen, dass der Treiber das jeweilige Ereignis bzw. das Ergebnis der Abarbeitung erhält und daraufhin den geordneten Abbruch aller noch laufenden Berechnungen bei den Arbeitseinheiten bewirkt. Bei der Abarbeitung fungiert der Treiber im Regelfall immer auch als Arbeitseinheit.

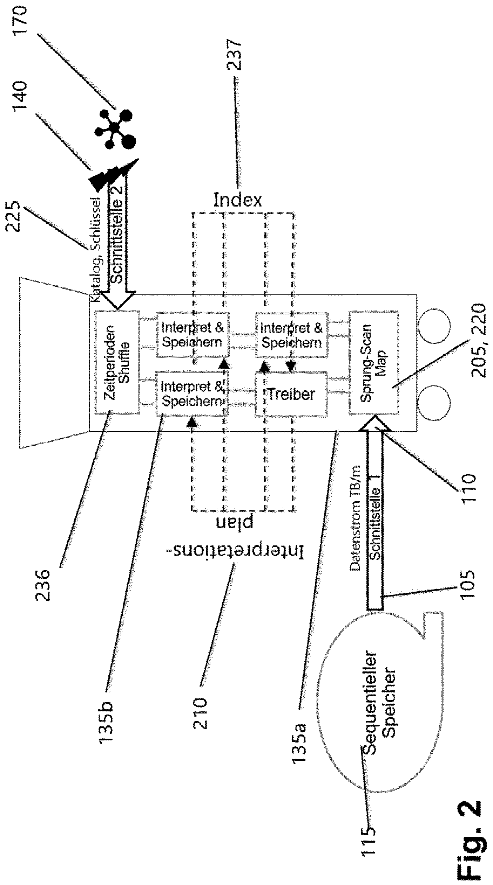

Fig. 2 zeigt den ersten Arbeitsmodus "mobile Datenbetankung" der Zwischenspeichereinrichtung 100 zur Verarbeitung der Messdaten. Zur Ausführung des ersten Arbeitsmodus kann es sich als vorteilhaft erweisen, wenn die zweite Datenleitung 140 über WIFI lediglich schmalbandig aktiviert ist, sodass der Zwischenspeichereinheit 100 über globale Dienste 170 Informationen zur Interpretation und Dekodierung bezüglich der Messdaten 225 bereitgestellt werden können, etwa temporäre kryptographische Schlüssel oder Signalkataloge für die in den Fahrzeugen aktuell eingesetzte Bordelektronik, welche zu diesem Zweck dann nicht notwendigerweise vorab auf der Rechneranordnung 125 installiert werden müssen. Diese Informationen können somit stattdessen beispielsweise von einem Server von der Zwischenspeichereinheit 100 je nach Bedürfnissen redundanzarm angefragt werden. Der sequenzielle Speicher 115 ist in diesem Modus über die erste Schnittstelle 110 an die Zwischenspeichereinheit 100 angeschlossen.

Zunächst wird, wie vorstehend schon beschrieben, eine der Rechnereinheiten 135 als Treiber (Driver) 135a ausgewählt. Dieser Treiber 135a analysiert die Messdaten zunächst lediglich hinsichtlich ihrer unterschiedlichen Dateiformate, wodurch Struktur- und/oder Format-Informationen über die Messdaten extrahiert werden. Da dieser Verarbeitungsschritt 205 rasch von statten geht und zahlreiche Datenblöcke der Messdaten hierbei übersprungen werden, wird dieser auch als Sprung-Scan bezeichnet. Um diesen Sprung-Scan durchzuführen werden eventuell globale Schlüssel bzw. Katalog Informationen benötigt, die entweder auf der Zwischenspeichereinheit 100 vorgehalten oder über die zweite Datenleitung 140 bereitgestellt werden.

Der Sprung-Scan 205 ist eine Methode, die von dem Treiber 135a durchgeführt wird, um rasch Strukturinformationen über eine sequenziell aufgebaute Datei, also insbesondere über die Messdaten, zu bekommen. Bei dieser Methode sind die eigentlichen Nutzdaten zunächst einmal nicht von Relevanz, sondern nur die Stellen innerhalb der Messdaten, an denen relevante Wechsel des Dateiformats und/oder Dekodier-Informationen vorzufinden sind. Im Allgemeinen können diese Stellen je nach Aufzeichnungskonfiguration recht beliebig sein. Daher gibt es, abhängig vom vorhandenen Format zwei grundsätzliche Methoden den Sprung-Scan auszuführen.

Die erste Methode wird hierbei als sogenannter "Informierter Sprung-Scan" bezeichnet. Dieser ist dadurch ausgezeichnet, dass die rasche Suche nach Formatwechseln innerhalb der Messdaten dadurch beschleunigt wird, dass dem Informierten Sprung-Scan Informationen, insbesondere über die Länge der DatenBlöcke der verschiedenen Formate bekannt gemacht sind. Der Informierte Sprung-Scan funktioniert also bei Formaten, in denen die Längen der Datenblöcke schon vor den Nutzdaten, zum Beispiel über Index-Blöcke bekannt gegeben werden (MDF, MAT, MP4, AVI, ...). In diesem Fall kann der Sprung-Scan aus dieser Kenntnis unidirektional von Strukturinformation zu Strukturinformation springen, indem er die SAN Verbindung anweist, die schon bekannte Länge folgender Nutzdaten zu überspringen. In der Regel liest dieser erste Schritt der "mobilen Betankung" also weniger als ein Prozent der Messdaten, um in der Folge einen parallelen Abarbeitungsplan 210 für die eigentlichen Nutzdaten zu erstellen und dauert damit nur wenige Sekunden.

Die zweite Methode wird als sogenannter "Heuristischer Sprung-Scan" bezeichnet. Dieser besitzt jeweils formatabhängige Prädiktoren für die Länge der einem Formatwechsel nachfolgenden Nutzdaten und führt damit eine heuristische Suche, z.B. in Form einer binären Suche) durch. In der Mitte eines zu untersuchenden Segments wird dabei die aktuelle Formathypothese zum Beispiel durch Anfahren geeigneter "Magic Bytes" (typische Datenanordnungen für das jeweilige Format) überprüft. Abhängig von der Größe des Segments und weiterer Faktoren wird dann die Wahrscheinlichkeit ermittelt, dass sich das Format zwischen dem Segmentanfang und der Segmentmitte geändert hat. Im Erfolgsfall, d.h. die Wahrscheinlichkeit liegt unterhalb einer vorgegebenen Schwelle, kann der heuristische Scan so mit dem letzten Viertel der Datei mit der Überprüfung fortfahren, ansonsten spult er über die SAN Schnittstelle zurück in das zweite Viertel der Datei. Je genauer die Vorhersage/Überprüfung der Formathypothese funktioniert, mit umso weniger Vorwärts- und (noch weniger) Rücksprüngen lassen sich die Formatwechsel innerhalb der Messdaten ermitteln, optimalerweise mit logarithmischer Komplexität.

Mit beiden Verfahren 205 können also Informationen gewonnen werden, an welchen Stellen der Messdaten Formatwechsel (insbesondere, wenn von einer Signalspur zu einer neuen Signalspur gewechselt wird) stattfinden und es können Informationen extrahiert bzw. angefragt (beispielsweise über einen zentralen Server) werden wie diese Formate abgearbeitet bzw. dekodiert werden können. Als Resultat kann demnach ein Abarbeitungsplan 210, der auch als "Interpretationsplan" bezeichnet wird, von der Gesamtdatei generiert werden, der die jeweils benötigten Dekodier-Informationen enthält. Dieser Interpretationsplan ist um Faktoren kleiner, typischerweise weniger als ein Prozent, als die Originaldatei, zumal seine Größe primär von der Anzahl der unterschiedlichen Formate, also den unterschiedlichen Sensoren und Steuergeräten, abhängt und nur in geringem Masse von der zeitlichen Dauer der Aufzeichnung, welche die urspr. Messdatei dominiert. Gemäß des Interpretationsplans 210 werden an die zur Verfügung stehenden Arbeitseinheiten 135b möglichst gleich große Segmente der Messdaten zur Abarbeitung verteilt. Mit den Informationen des Abarbeitungsplans können die Arbeitseinheiten 135b nun über ihre eigenen SAN-Ports jeweils ihren Teil des Gesamtstroms/der Messdaten 220 in einzelne Samples oder Signale aufteilen und unmittelbar an eine lokale Speichermethode, welche nachstehend beschrieben wird, weiterleiten. Falls es notwendig ist, können sowohl der Treiber 135a als auch die Arbeitseinheiten 135b über den LAN Switch 145 und die WIFI Schnittstelle 140 dabei auf globale Dienste zurückgreifen, entweder um verschlüsselte Informationen temporär zu entschlüsseln oder um strukturergänzende Informationen über die Kanäle und Nachrichten, welche in den Messdaten enthalten sind, aus einem Bordnetzkatalog zu erhalten.

Der Interpretationsplan 210 kann also in tabellenartiger Form die Struktur bzw. Kodierungsinformationen der Messdaten aufweisen. Der tabellenartige Abarbeitungsplan weist bevorzugt Informationen auf, ab welchem Byte (Position) und bis zu welchem Byte (Länge) innerhalb der Messdaten ein bestimmtes Datenformat vorhanden ist. Diese Abschnitte bestimmen die Datenfenster bzw. Segmente 220. Zusätzlich kann in dem Interpretationsplan eine weitere Spalte vorgesehen sein, welche die Dekodierungsinformationen der jeweiligen Segmente aufweist. Der Interpretationsplan kann auch eine vierte Spalte enthalten, welcher die in dem Segment enthaltenen Kanal- bzw. Zeitinformationen einschränkt, so dass technisch überlappende Segmente entstehen, die dennoch fachlichen Partitionierungen der Messdatei entsprechen. Der Treiber 135a koordiniert nun mithilfe des Interpretationsplans 210 die parallele Verarbeitung der Messdaten durch die Arbeitseinheiten 135b, indem den Arbeitseinheiten 135b ausgesuchte Segmente, inklusive der jeweiligen Dekodierungsinformationen, bereitgestellt werden.

Dies kann beispielsweise dadurch realisiert werden, dass sich jede Arbeitseinheit 135b per SAN Port-to-Port (P2P) Verbindung 130 an ein ihr zugewiesenes Segment 220 des Datenstroms/der Messdaten koppelt (Map-Operation). Die Arbeitseinheit 135b interpretiert nun die Binärdaten mithilfe der vom Treiber 135a übermittelten Plan-Struktur 210, bzw. ihres zugehörigen Ausschnitts daraus, und schreibt die Ergebnisse, je nach Sicherheitsbedürfnis wiederum verschlüsselt oder unverschlüsselt, in ein neuartiges Signal-Analyseformat in seinen jeweiligen Signaldatenspeicher 150. Die dabei entstehenden Meta-Daten über die interpretierten Kanäle, Signal- und Zeitwerte und Ablageorte werden zunächst im Hauptspeicher 160 der Arbeitseinheiten aufgesammelt und nach erfolgreicher Abarbeitung an den Treiber 135a zurückgemeldet, welcher daraus eine zentrale Indexdatei 237 koordiniert.

U.a. kann der Treiber dabei veranlassen, dass die Arbeitseinheiten Informationen über bestimmte Kanäle und/oder Zeitperioden untereinander austauschen. Während bei der allg. Shuffle-Operation alle Datensätze potenziell zwischen allen Rechen-Einheiten über das Netzwerk ausgetauscht werden, besteht der ZeitPerioden Shuffle 236 lediglich aus der zielgerichteten Kommunikation eines kleinen Ausschnitts der Datensätze an den Rändern der Zeitperioden pro Arbeitseinheit auf jeweils eine einzige, dedizierte Zieleinheit, welche die jeweilige Anschlussperiode verwaltet. Schließlich wird die daraus resultierende Indexdatei 237 redundant auf allen Indexspeichern 155 abgelegt, so dass von nun an die Rolle des Treibers für die nachfolgenden Analyse (siehe kommende Erläuterung des Modus "online Transformation und (Re-)Synthese") beliebig zwischen den Arbeitseinheiten wechseln kann.

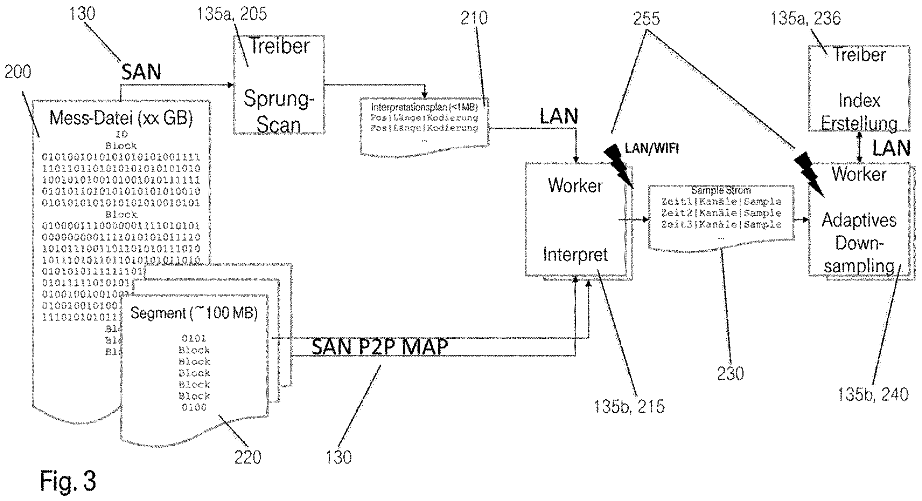

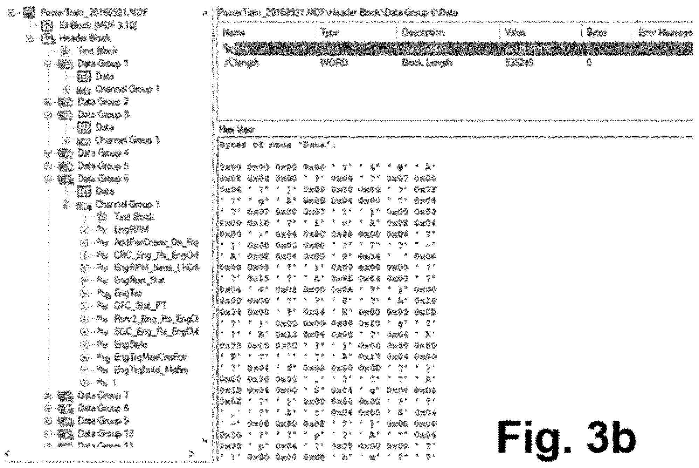

Fig. 3 illustriert den Sprung-Scan der Messdaten zur Erzeugung des Abarbeitungsplans. Der Ausgangspunkt ist die Originaldatei der Messdaten 200. Die Messdatei weist mehrere Signalspurinformationen in sequenziell hintereinander geschriebenen Blöcken auf, welche meist durch aufeinanderfolgende Flush-Vorgänge aus dem Ringspeicher des Loggers entstanden sind. Die format-homogenen Blöcke selbst enthalten bevorzugt eine Sequenz von kodierten Samples, welche durch chronologische Beobachtungsvorgänge im Ringspeicher des Loggers aufgebaut wurden. Über die Port-2-Port SAN Schnittstelle 130 hat der Treiber 135a Zugriff auf die so strukturierte Messdatei 200 und führt einen - je nach Dateityp informierten oder heuristischen - Sprung-Scan 205 durch. Aus diesem wird ein Abarbeitungsplan 210 abgeleitet und via LAN an die Arbeitseinheiten 135b zur parallelen Abarbeitung 215 delegiert. Über den P2P SAN Schnittstelle haben die einzelnen Arbeitseinheiten 135b nun ebenfalls Zugriff auf die Messdatei 200, allerdings beschränkt auf die zuvor identifizierten Segmente 220, die ihnen gemäß des Abarbeitungsplan 210 zugewiesen wurden. Bei der Interpretation der Segmente 220 bzw. der darin enthaltenen Blöcke können die Arbeitseinheiten 135b auf globale Dienste 225 z.B. zum Erhalt von kryptographischen Schlüsseln oder Signalkatalogen zurückgreifen. Zunächst können so aus den Blöcken also bevorzugt kanalgruppen-basierte Sample-Strukturen 230 im Hauptspeicher 160 und/oder dem Indexspeicher 155 rekonstruiert werden, welche daraufhin von den Arbeitseinheiten 135b weiterhin parallel komprimiert und abgespeichert werden 240. Die ursprünglichen Messdaten wurden bevorzugt sequenziell aufgezeichnet und können daher in Darstellung 130 auf einfache Weise zeitlich angeordnet werden.

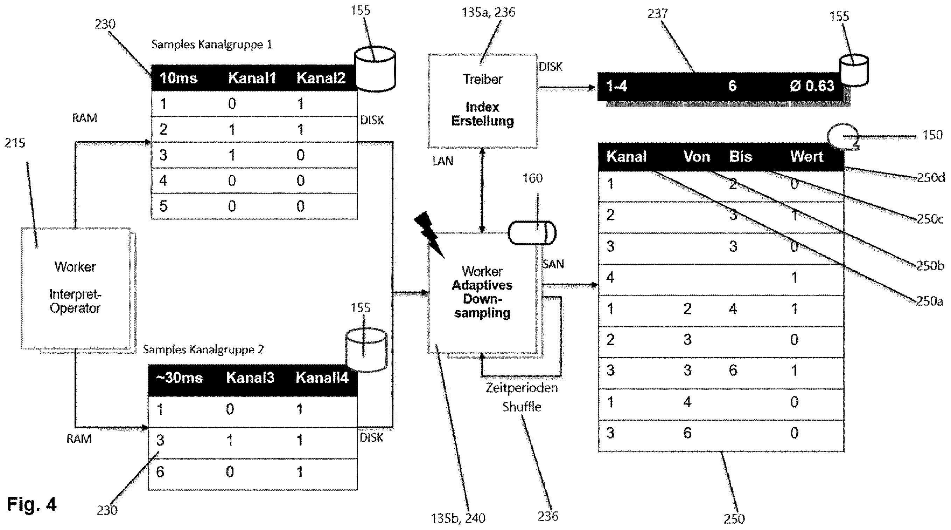

Fig. 4 illustriert den anschließenden Vorgang der Erzeugung des Signal-Analyseformats 250, wobei eine verteilte, aber dennoch übergreifend indizierte Speicherung (wir sprechen hier von virtueller Speicherung) der Signalspuren durch adaptives Down-Sampling durchgeführt wird. Wie schon in Fig. 3 sind auch in Fig. 4 die initial dekodierten Segmente 230 gezeigt, die auch als Sample-Strom 230 bezeichnet werden, welche von den Arbeitseinheiten 135b generiert wurden. Diese Sample-Ströme 230 orientieren sich bezüglich ihres Formats an dem Layout der interpretierten Spursegmente. Typischerweise kommen zeitlich aufeinanderfolgende Samples eines Steuergeräte-Busses (also einer aus technischen Gründen zusammenhängenden, da gemeinsam kommunizierten Kanalgruppe1) gefolgt von einem Satz zeitlich überlappender Samples aus einer anderen Aufzeichnungsquelle (Kanalgruppe 2). Auf einem anderen Worker 135b kann derweil ein komplett anderer (zeitlicher und logischer) Ausschnitt der Originaldatei bearbeitet werden. Dieses Samples werden zunächst auf die Disk 155 gespult bis alle Aufzeichnungsquellen durchgearbeitet sind und ein neuer Zeitabschnitt beginnt.

Bevorzugt noch während der Interpretation 215 bzw. der Abarbeitung des nächsten Satzes an Samples 230 beginnt, also multi-threaded, wird ein nächster Verarbeitungsschritt, der als adaptives Down-Sampling 240 bezeichnet wird, gestartet. In diesem Verarbeitungsschritt werden die Spulsegmente aller Quellen simultan von Anfang bis Ende geleert und weiterverarbeitet.

Das adaptive Down-Sampling funktioniert wie folgt: zunächst werden die in den Samples zusammen repräsentierten Kanäle voneinander getrennt und nur noch die Änderungen ihrer Nachrichten Inhalte (Signale/Werte) weitergeleitet. Unter Änderungen der Nachrichten Inhalte ist beispielsweise zu verstehen, wenn sich der Inhalt von Kanal 1 zum Zeitpunkt von 10 ms von "0" auf "1" ändert. Der Verlauf dieser Nachrichten eines Kanals wird auch als Signalspur bezeichnet. Die vollständige Signalspur des Kanals 1 lautet in einem 10 ms Intervall: 0, 1, 1, 0, 0.

Als Cache für die Nachrichtenvergleiche dient dabei der Hauptspeicher 150 welcher mindestens eine Größe linear in der Anzahl der zu verarbeiteten Kanäle bzw. Nachrichtengrößen besitzt. Mathematisch entspricht die komprimierte Darstellung der Signalspuren folgender Relation:

$$Q:\{(c,t_1,t_2,m)|\forall t_1\leq t\leq t_2\ (c,t,m)\in\sigma_t\}$$

Die so komprimierte Darstellung des Kanals 1 lautete also 0[0-10],1[10-30],0[30-50]. Die Signalspuren unterschiedlicher Quellen (andere Kanäle, andere Sample-Frequenzen) werden gleichzeitig miteinander abgemischt bzw. nach dem Startzeitpunkt der Nachrichtenänderung sortiert in sequenzielle Zieldateien auf Speicher 160 geschrieben. Die Zieldateien/Satzstrukturen sind dabei auf die Längeninformationen der Nachrichten zugeschnitten, also im Vorhinein bekannt. Gleichzeitig werden regelmäßig Statistiken und Inhaltsreferenzen auf der lokalen Disk 155 aktualisiert. Der Worker 135b generiert also ein Verzeichnis seiner Dateien, Kanäle und speziell auch der Zeitintervalle, für die er sich verantwortlich zeigt und kann diese auch dem Driver 135a während des Interpretationsprozesses mitteilen. Der Treiber 135a wiederum kann daraus sehr schnell einen Gesamtüberblick 237 (Intervallzuständigkeitsplan) generieren und den Arbeitseinheiten 135b zur langfristigen Speicherung und Analyse auf Disk 155 zur Verfügung stellen. In der letztendlichen Realisierung von 137 können einige weitere Kennzahlen und Statistiken (Anzahl der Samples, Sample-Rate, Rand-Werte, ...) erfasst werden, welche die späteren Analyseschritte unterstützen.

Die Einträge der Signalspuren zu Anfang bzw. Ende der so interpretierten und gespeicherten Zeitabschnitte sind potenziell nun in Analysezusammenhängen auch für andere Arbeitseinheiten (Worker) mit überlappenden/angrenzenden Verantwortlichkeiten relevant, bspw. um Ableitungen zu berechnen. Entsprechend des aktualisierten Gesamtüberblicks können genau diese Einträge, vom Treiber 135a initiiert, über eine zielgerichtete Netzwerkkommunikation (Zeitperioden Shuffle 236) zwischen jeweils zwei Arbeitseinheiten 135b (Ende-Signal Kanal X Periode 1 <-> Anfang-Signal Kanal X Periode 2) ausgetauscht werden. In der Praxis lässt sich diese Kommunikation auf $(n - 1) * k$ Nachrichtenpaare beschränken, wobei $n$ die Anzahl der segmentierten Zeitperioden und $k$ die Anzahl der Kanalgruppen darstellt.

Die Einarbeitung solcher empfangenen Informationen erfolgt auf der bereits geschriebenen Datei durch gezielte, byte-weise Überschreibung. Denn auf Grund des festen Speicherformats können beim ersten Schreiben der Datei gezielte 0-Bytes am Anfang und dem Ende der Datei hinzugefügt werden, die während des Vorgangs 236 dann ersetzt werden. Hieraus folgt, dass einzelne Spureinträge im finalen Speicherformat 250 redundant gespeichert sind, damit die lokalen Datensegmente in sich zeitlich und logisch abgeschlossen sind und sich die erforderliche Netzwerkkommunikation während weiterer Analysen auf dieser Basis minimiert.

Tests mit realen Messdaten aus der Fahrzeugerprobung zeigen Kompressionsraten für das neuartige Signal-Analyseformat mittels adaptiven Down-Sampling zwischen 10% und 90% der Originaldatei je nach Dynamik der aufgezeichneten Signale und einem evtl. schon bei der Aufzeichnung verwendeten Kompressionsverfahrens. Durch die Darstellung von Signaländerungen anstelle von Samples werden bei der anschließenden Analyse gegenüber Standard-Transformationsoperatoren sogar bis zu 80% der Berechnungsressourcen (CPU, RAM) eingespart.

Die Formate 230, 237 und 250 lassen sich beim Schreiben gegebenenfalls mit zentral autorisierten Verschlüsselungsverfahren 225 kombinieren, etwa um unabhängig von Hardware-Kryptographie-Komponenten den Datendiebstahl aus der Datentankstelle zu verhindern bzw. die Daten unterschiedlicher Mandanten effektiv voneinander zu separieren.

Ein beispielhaftes Ergebnis einer komprimierten Signalspur 250 ist in Fig. 4 gezeigt. Die einzelnen Kanäle sind in der Spalte 250a zusammengefasst. Die Spalte 250b markiert den Anfangszeitpunkt und die Spalte 250c den Endzeitpunkt einer Nachrichten-Änderung des jeweiligen Kanals, wobei die Zeiteinheiten vorzugsweise auf die kleinste vorhandene Samplefrequenz aller vorhandenen Kanäle bezogen sind (z.B. Anzahl der Mikrosekunden seit dem 1. Januar 1970), sodass die einzelnen Kanäle miteinander in zeitliche Beziehung gesetzt werden können. Schließlich ist in Spalte 250d der Inhalt der Nachricht angegeben, der bei einer Änderung vorgefunden wird.

Die auf die Speicher 150 der einzelnen Arbeitseinheiten verteilten Segmente im Analyseformat 250 zusammen mit dem im Direktzugriffsspeicher 155 auf allen Arbeitseinheiten redundant gespeicherten Indexdaten 237 bilden in ihrer logischen Gesamtheit eine virtuelle Analysedatei.

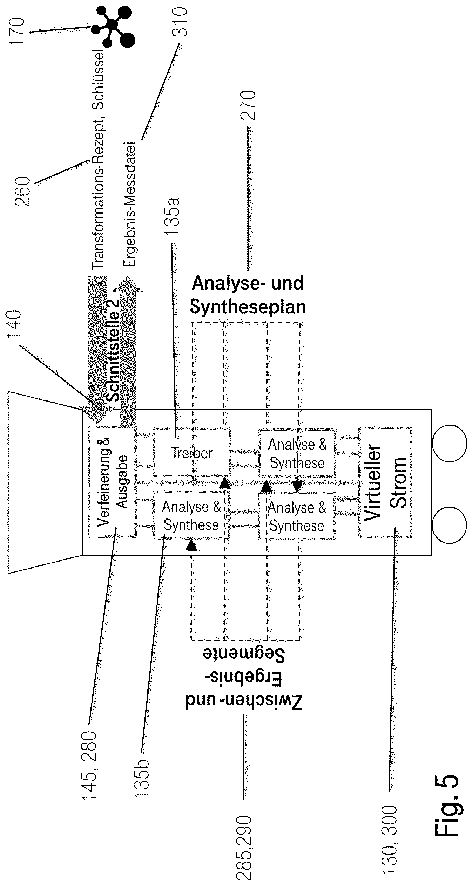

Fig. 5 zeigt im Überblick die Aufbereitung, auch als Transformation und (Re-)Synthese bezeichnet, der Analysedaten für einen Cloud-Klienten 170, d.h. eine Benutzerinteraktion oder einen automatisierten Prozess, welcher gezielte Ausschnitte oder Abstraktionen der Rohmessdaten benötigt. Vorzugsweise ist hierfür die zweite Datenleitung 140 breitbandig aktiv, sodass globale Dienste angefragt bzw. Kundenanfragen mit wunschgemäß erzeugten Messdateien befriedigt werden können. Der Driver 135a stellt dazu auf einem exportierten Netzwerk-Port einen Abfragedienst (Endpunkt) mit einem geeigneten Internet-Protokoll (z.B. http nach dem REST Paradigma) zur Verfügung, der von Klienten genutzt werden kann. An diesen Dienst wird ein (Re-)Synthese Auftrag 260 zum Beispiel von einer Leitstelle, einem Server oder auch einzelnen, datenverarbeitenden Big Data Prozessen auf Veranlassung eines Mandanten mittels einer Signaltransformations-Hochsprache (welche nachstehend beschrieben wird) hinterlegt. In dieser Hochsprache kann der Klient das 1) Finden von Ereignissen/Nachrichtenmustern, 2) die Verdichtung von Signal- /Kanalstatistiken, 3) den Export von Rohsignalen und/oder 4) die Ableitung von künstlichen (aus Mess-Kanälen berechneten) Signalen formulieren und anfragen. Im Rahmen der Hochsprache 260 kann der Klient 170 auch temporäre Autorisierungs- bzw. kryptographische Schlüssel übertragen, falls die Datentankstelle für mehrere Mandanten konfiguriert ist und/oder die zugrundeliegenden Analysedateien verschlüsselt vorliegen.

Der Driver 135a übersetzt die Hochsprache dazu mithilfe der Indexdaten 237 in einen verteilten Abarbeitungsgraphen für Signaltransformationen, den sogenannten Analyse- und Syntheseplan 270, welcher über die LAN-Schnittstelle 145 an die Worker 135b zur parallelen Ausführung übermittelt und koordiniert wird. Die Knoten/Operatoren 280 dieses Plans 270 teilen sich in zwei Kategorien. Das sind zunächst neuartige, perioden-assoziative Verfeinerungsoperatoren, welche auf der Basis des vorstehend beschriebenen Signal-Analyseformats 250und des bereits beschriebenen Zeitperioden Shuffle 236 als iterative Kette, also insbesondere azyklisch, realisiert sind. Die Zwischen-Ergebnisse bzw. -Segmente 285 dieser Operator-Kette werden dabei auf den Indexspeichern 155 gespult.

Die finalen Knoten der Operator-Ketten aus 270 enthalten Ausgabeanweisungen inklusive gewünschter Kodierungen für die vom Klienten 170 angefragten Zielformate 310. Diese Ausgabeoperatoren sind sozusagen die Gegenstücke zu den Interpretationsoperatoren bei der mobilen Betankung, denn die möglichen Zielformate umfassen nicht nur selbstbeschreibende Datentypen wie z.B. CSV, JSON, AVRO, ... sondern insbesondere auch wieder die in der Branche standardisierten Messdaten-Aufzeichnungsformate. Insbesondere können diese Formate für den Zweck der parallelen Synthese so optimiert werden, dass Formatwechsel bzw. Datenblocklängen exakt mit den von den AusgabeOperatoren auf den Signalspeichern 160 erzeugten Ergebnis-Segmenten 290 zusammenfallen. Das logische Endergebnis 310 lässt sich so als einfache Konkatenation der Ergebnis-Segmente beschreiben. Zum Zwecke der optimierten Speicher- und Netzwerknutzung wird diese Konkatenation in unserer Erfindung allerdings nur uneigentlich durchgeführt, indem der Driver 135a für den Klienten einen virtuellen Ausgabe-Stream 300 über eine Weiterleitungsfunktion des SAN-Switches 130 an die jeweiligen Arbeitseinheiten bzw. deren Signalspeicher 160 konstruiert, so dass auch der Klient die Datei 310 über die zweite Datenleitung 140 segmentweise und fehlertolerant lesen kann.

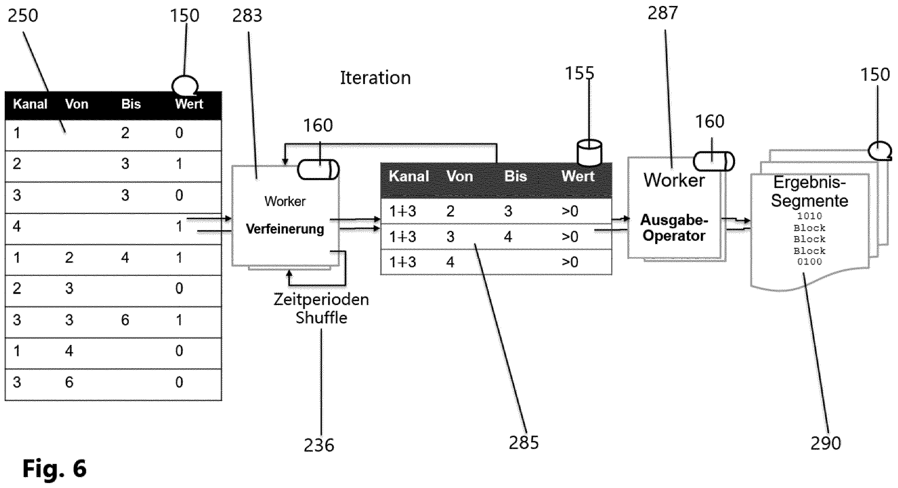

Fig. 6 detailliert das Verfeinern bzw. die (Re-)Synthese der Analyse-Daten anhand eines Beispiels. An dieser Stelle ist es von Bedeutung, sich noch einmal die Invariante zu vergegenwärtigen, dass sich in dem beschriebenen Signal-Analyseformat alle zu einem Zeitabschnitt/Analysezusammenhang gehörenden Informationen unabhängig von Kanal, Quelle und Aufzeichnungsrate innerhalb des zugehörigen Segments 250 befinden. Mathematisch lässt sich ein solcher Aufbau einer Intervallpartitionierung $I$ als Multi-Menge über Q beschreiben

$$I^Q \subseteq \mathfrak{P}(Q)$$

$$I^Q \ni I = \{i_{t1}, i_{t2}, \ldots, i_{tn-1}, t_n \subseteq Q \,|\, t_1 \leq t_2 \leq \cdots \leq t_n \,\wedge\, \forall (c, t_a, t_b, m) \in Q \;\; mit \;\; t_a \leq t_j, t_i \leq t_b$$

$$\Rightarrow (c, t_a, t_b, m) \in i_{ti, tj}\}.$$

Daraus ergibt sich, dass nahezu alle Operationen (Kombination, Filterung, Ableitung, Ereigniserkennung - bis auf die Integration, welche beispielhaft für weitere, periodenübergreifende Operationen/Kumulationen nachstehend beschrieben wird) durch lokale Berechnungen 283 und gänzlich ohne Resampling und Re-Partitionierung ausgeführt werden können. Beispielhaft sei das in Fig. 6 für die Konkatenation von Nachrichten (sprich: Addition von Signalen/Kanälen) □ gezeigt:

$$\dot{+}_{c1,c2}: I^Q \longrightarrow I^{Q'}, \dot{+}_{c1,c2}(I)=\bigcup \dot{+}_{c1,c2}(i\in I)$$

$$\dot{+}_{c1,c2}(i)=\{(c_1\dot{+}c_2,t_a,t_b,\ m_1\dot{+}\ m_2)|\ \forall t_a\leq t\leq t_b\ \exists\ (c_1,t_1,t_2,m_1),(c_2,t_3,t_4,m_2)\in i,$$

so dass $\max(t_1,t_3) \leq t \leq \min(t_2,t_4)\}$

Die Filterung/Extraktion einzelner Kanäle ist sogar noch trivialer

$$\leftarrow_{c1}: I^Q \longrightarrow I^{Q'}, \leftarrow_{c1}(I)=\bigcup \leftarrow_{c1}(i\in I),\ \leftarrow_{c1}(i)=\{(c_1,t_a,t_b,\ m)\ \in i\}$$

Die Filterung von Zeitbezügen bzw. ganzen Perioden sind folgendermaßen aus

$$\downarrow_{t1,t2}: I^Q \longrightarrow I^{Q'}, \downarrow_{t1,t2}(I)=\bigcup \downarrow_{t1,t2}(i\in I)$$

$$\downarrow_{t1,t2}(i)=\{(c,t_a,t_b,m)\ |\ \forall t_a\leq t\leq t_b\ \exists\ (c_1,t_3,t_4,m)\in i\ \wedge\ t_1\leq t_4\ \wedge\ t_3 \leq t_2,$$

so dass

$$\max(t_1,t_3) \leq t \leq \min(t_2,t_4)\}$$

Die Filterung eines Kanals abhängig vom Wahrheitswert eines weiteren (booleschen) Kanals ist wie folgt definiert:

$$\uparrow_{c1,c2}: I^Q \longrightarrow I^{Q'}, \uparrow_{c1,c2}(I)=\bigcup \uparrow_{c1,c2}(i\in I)$$

$$\uparrow_{c1,c2}(i)=\{(c_1,t_a,t_b,m)|\ \forall t_a\leq t\leq t_b\ \exists\ (c_1,t_1,t_2,m),(c_2,t_3,t_4,t)\in i,$$

so dass

$$\max(t_1,t_3) \leq t \leq \min(t_2,t_4)\}$$

Die Berechnung eines booleschen Kanals z.B. aus der Wertüberschreitung eines numerischen Kanals definiert sich wie folgt:

$$>_{c,m1}: I^Q \longrightarrow I^{Q'}, >_{c,m1}(I)=\bigcup >_{c,m1}(i\in I)$$

$$>_{c,m1}(i)=\{(c,t_a,t_b,b)|\ \forall t_a\leq t\leq t_b\ \exists\ (c,t_1,t_2,m)\ \in i$$

mit

$$b = \text{t} \wedge m \overset{\cdot}{>} m_1 \text{ oder } b = \text{t} \wedge m \overset{\cdot}{\leq} m_1,$$

so dass

$$\max(t_1,t_3) \leq t \leq \min(t_2,t_4)\}$$

Die Beschreibungen weiterer lokaler Verfeinerungs-Operatoren 283 sind der Vollständigkeit halber im Addendum dieses Dokuments zu finden. Die Vorgehensweise ist dabei bzgl. der Rechnerkapazitäten ähnlich unaufwändig wie das adaptive Downsampling 240: Das sortierte Eingabe-Segment wird von Anfang bis Ende durchfahren, im Cache 160 liegt die jeweils aktuelle Nachricht der Eingangskanäle und die letzte berechnete Nachricht der Ausgangskanäle. Der nächste Eingangsdatensatz wird eingelesen und ggfs. der Cache aktualisiert und in eine neue Ausgangsnachricht kombiniert. Nur bei einer Änderung oder dem Ende der Eingangssegments wird der nächste Zielsatz des jeweiligen Ausgangskanals in ein neues Zwischenergebnis-Segment 285 auf dem Indexspeicher 155 angehängt. D.h. das Format 250 bleibt für die nächste Operator-Iteration der Verarbeitungskette 270 erhalten.

Die Verfeinerungs-Operation der Ableitung als punktuelle Differenz (es lassen sich entsprechend unserer Erfindungs-Beschreibung selbstverständlich auch "stetigere" Operatoren realisieren, siehe Addendum) funktioniert wie folgt und in Anbetracht der Tatsache, dass die Ränder der dargestellten Zeitperioden ja mehrfach bzw. redundant gespeichert sind:

$$\partial_c(i)=\{(\partial c,t_a,t_b,m')\mid (c,t_1,t_2,m_1),(c,t_3,t_4,m_2)\in i \text{ mit}$$

$$t_2=t_3$$

$$t_a= t_3, t_b= t_3+1, m'= m_2\dot{-}m_1 \text{ oder}$$

$$t_a= t_3+1, t_b= t_4, m'= \dot{0}\}$$

Einzig im Fall der Integration - stellvertretend für weitere, analog bzw. im Regelfall sogar einfacher zu realisierende, periodenübergreifende Kumulationen, siehe Addendum - genügen die lokalen Informationen zur Berechnung der zeitkumulierten Nachrichten nicht aus. Dennoch sind solche Operationen zeitassoziativ umsetzbar, d.h. sie können in zwei Phasen geteilt werden: eine möglichst umfassende, arbeitseinheiten-lokale Berechnungsphase und eine möglichst minimale, über gezielte Netzwerk-Kommunikation vermittelte Koordinationsphase zwischen den Arbeitseinheiten.

In Falle der Integration werden in der lokalen Phase zunächst die Segment-Integrale kumuliert:

$$\textstyle\int_c(i)=\{(\textstyle\int c,t_{2n-1},t_{2n},\Sigma m_j)\mid (c,t_1,t_2,m_1),\ldots,(c,t_{2n-1},t_{2n},m_n)\in i \text{ mit}$$

$$t_{2j}=t_{2j+1}\}$$

$\Sigma c(i)=m,$ so dass $(c,t_1,t_2,m)\in \textstyle\int c_c(i)$ und $t_1$ maximal.

In der Koordinationsphase wird nun also das jeweils letzte Segment-Integral $\Sigma c(i)$ in einer Variante des Zeitperioden Shuffle 236 an alle in der chronologischen Zeitfolge nachfolgend operierenden Arbeitseinheiten 135b kommuniziert. Diese Worker 135b passen dann ihr lokal kumuliertes und bereits auf den Indexspeicher 155 geschriebenes Teilergebnis mittels des bereits beschriebenen Überschreibungsverfahrens (im folgenden durch die überladene $\dot{+}: I^Q \times M$ $\square I^Q$Operation repräsentiert) erneut an. Sei also $I^Q \ni I=\{i_1,\ldots, i_n\}$ eine Intervallpartitionierung mit $n$ sukzessiven Segmenten $i_j$, dann gilt

$$\textstyle\int_c(I)=\textstyle\int_c(i_1)\cup (\textstyle\int_c(i_2)\dot{+}\Sigma c(i_1))\cup\ldots\cup (\textstyle\int_c(i_n)\dot{+}\Sigma_{j<n}\Sigma c(ij))$$

Die Komplexität der Koordinationsphase des Integrationsoperators ist damit unabhängig von der Signal- bzw. Zeitlänge des zugrundeliegenden Messdatei lediglich $n$! Weitere (periodenübergreifende) Verfeinerungs-Operatoren 283, wie z.B. die zeitliche Verschiebung, die sich allesamt in dieser Komplexitätsklasse bewegen und zusammen die Basis einer geeigneten Analysehochsprache für Signalspuren bilden, werden im Addendum beschrieben.

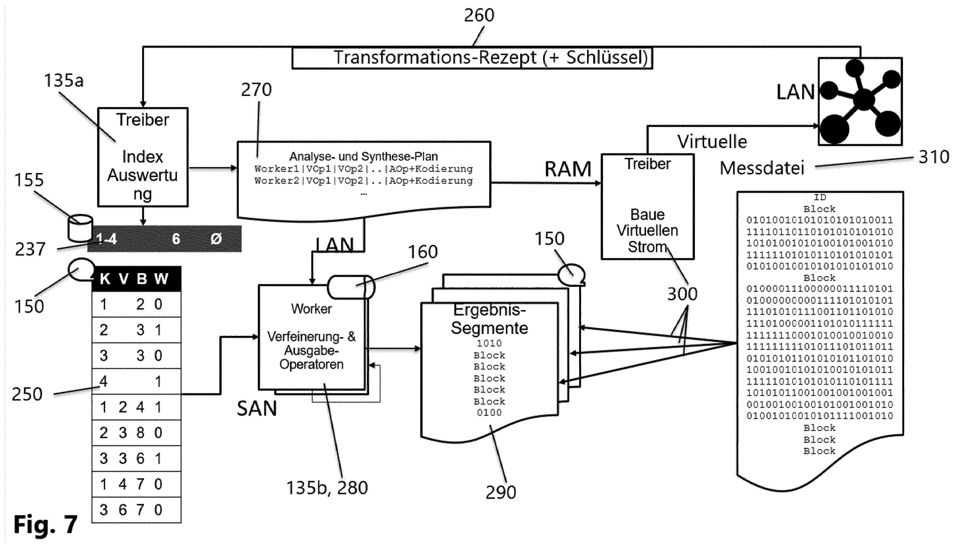

Fig. 7 illustriert die verteilte, dynamische (Re-)Synthese auf Basis einer solchen Hochsprache bzw. eines Abfrage-Protokolls 260, welches das Ziel hat, gezielte Ausschnitte und Abstraktionen aus den urspr. aufgezeichneten Signalspuren in mehreren Zielformaten (virtuelle Messdatei 310) auf Anfrage eines globalen Dienstes/Klienten 170 zu berechnen:

```
bool := 't'|'f'
literal := '\'[A-Za-z0-9\:]* '\'
number := -?(\d+(\.\d*)?|\d*\.\d+) ([eE] [+-]?\d+)?
```

```
channel := (?<bus>[A-Za-z0-9\:/%]+)\.(?<name>[A-Za-z\_%]+)?
operation := 'abs' | 'coalesce' | 'integrate' | 'derivate' |
             'max' | 'min' | 'avg' | 'mean' |
             'first' | 'last' | 'shift' | '!'
operationCall := operation '(' formula (, formula)* ')'
operand := '+' | '-' | '*' | '/' | '^' | '==' | '<>' | '>' |
           '<' | '>=' | '<=' | '<' | '&' | '|'
term := formula operand formula
formula := bool | literal | number | channel |
           operationCall | '(' term ')'
format := 'json' | 'csv' | 'mat' | 'vts' | 'dat' | 'mdf' |
          'mf4' | 'atfx'
trace_id := UUID
job := 'when' formula 'in' trace_id
          'then' format formula (, formula)*
```

Der Driver 135a übersetzt diese Hochsprache mithilfe der Indexdateien 237 (die virtuellen Messdateien werden über geeignete Identifikatoren, hier ohne Beschränkung der Allgemeinheit als Universally Unique IDentitifer - UUID umgesetzt) in einen azyklischen Abarbeitungsgraphen, den Analyse- und Syntheseplan 270, von parallelen lokalen Verfeinerungsoperatoren 283, synchronisierenden Zeit Perioden Shuffle-Koordinationsknoten 236 sowie den finalen, wiederum parallelen Ausgabeoperatoren 287.

Die Ausgabeoperatoren wandeln den von den vorangegangenen Operationen erzeugten (pro Arbeitseinheit: zeit-partiellen) Strom von Nachrichtenänderungen 285, welcher auf dem Indexspeicher 155 gespult wird, unmittelbar in entsprechende Segmente 290 eines gewünschten Zielformats um (siehe dazu auch Fig. 6). Hierbei werden die Eigenheiten dieser Zielformate, wie z.B. optimale, redundanzfreie Kodierungen durch Formatwechsel und Kompression, ausgenutzt sowie auf Vorgaben aus der (Re-)Synthese-Abfrage eingegangen. Zu diesem Zweck enthält der Analyse- und Syntheseplan 270 genau solche, für die Dauer der Abfrage geltenden "Konventionen", damit die parallel und unabhängig erzeugten Segmente 290 vorhersagbar und nahtlos zu einer logischen Gesamtdatei 310 zusammenpassen. Der Driver kann daher schon während der Laufzeit der Transformation einen weiterleitenden Datenstrom 300 konstruieren, welcher die Daten aus den einzelnen Ergebnis-Segmenten 290 über die SAN Schnittstelle 130 in eine sich über Schnittstelle 140 manifestierende, resultierende Messdatei 310 eineindeutig abbildet. Durch die Unterstützung geeigneter Protokollanweisungen wie sie auch beim Versenden von Mediendateien, wie z.B. Audio- und Videoströmen, verwendet werden, z.B. Http-Streaming, lassen sich mittels mehrerer regionaler Datentankstellen im "online Transformation und (Re-)Synthese"-Modus so global interaktive und verteilte Analyseprozesse gestalten.

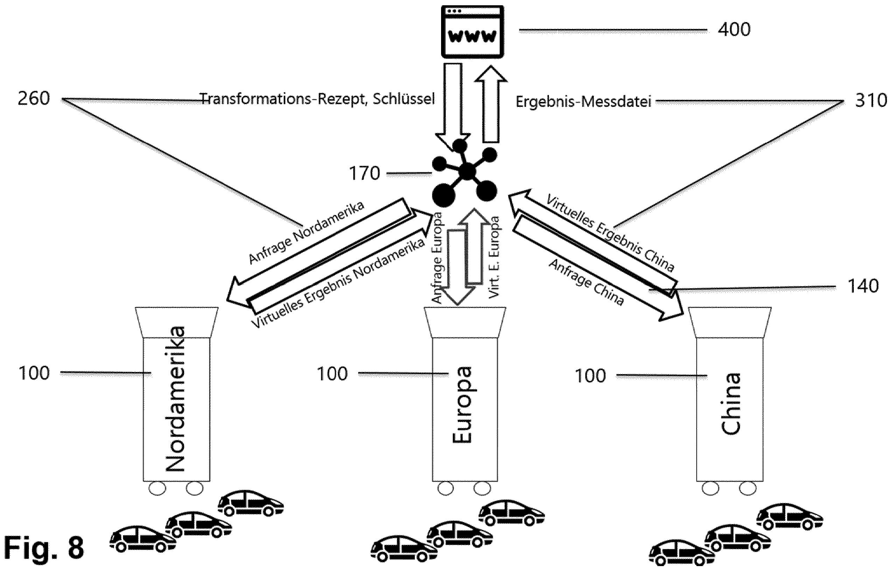

Fig. 8 erläutert die Erfindung und ihre Eigenschaften noch einmal anhand eines konkreten Fallbeispiels, welches in der Realität auftreten kann, aber die Erfindung keineswegs auf dieses Beispiel beschränkt.

Bei heutigen Kraftfahrzeugen, insbesondere PKWs, wird eine Vielzahl von Prozessen elektronisch gesteuert und überwacht. Um PKWs zu verbessern bzw. Fehler feststellen zu können, müssen diese Daten regelmäßig möglichst vollständig ausgewertet werden. Dazu senden Fahrzeughersteller Flotten von speziell instrumentierten Vorserienfahrzeugen in die klimatisch und situativ verschiedensten Regionen der Erde. Ein Problem hierbei ist, dass solch ein Pkw innerhalb einer Stunde ungefähr ein Terabyte an Daten erzeugen kann. Würden alle PKWs versuchen, diese Daten per Funk an einen zentralen Server zu versenden, bleibt zu erwarten, dass dies die technische Infrastruktur der Regionen bzw. des Fahrzeugherstellers überlasten würde und/oder dass hier ein großer Kostenfaktor entstünde. Erfindungsgemäß kann nun der Prototyp-Pkw, beispielsweise, wenn dieser betankt werden muss, die in ihm generierten Messdaten gemäß Fig. 1 an die in den jeweiligen Regionen stationierten Zwischenspeichereinrichtung 100 übertragen. Aufgrund der physischen Nähe zu dieser Zwischenspeichereinrichtung 100, also der Datentankstelle, kann dabei eine kabelgebundene Übertragung stattfinden, die hohe Datenübertragungsraten ermöglicht, so dass der Prototyp seine Testfahrten rasch wieder aufnehmen kann. Auf diese Weise kann der sequenzielle Speicher 115 des PKWs regelmäßig geleert werden, sodass keine oder nur eine geringe Anzahl der für den Hersteller wertvollen Messdaten verloren gehen, gleichzeitig die Fahrzeugtests vor Serienfertigung termingerecht abgeschlossen werden können.

Die verschiedenen Sensoren in den Pkw schreiben ihre jeweiligen Messdaten in der Regel in unterschiedlichen Formaten in den sequenzielle Speicher 115, sodass eine herkömmliche Big-Data Auswertungsmethode, wie sie auf Textdateien in den Rechenzentren des Automobil-Herstellers oftmals schon durchgeführt werden, nicht unmittelbar in Betracht kommt. Textfiles weisen nämlich selbst innerhalb großer Originaldateien ein einheitliches Format (Zeichencode) auf und können deshalb einfach in einzelne Segmente zur parallelen Abarbeitung zerstückelt werden. Angenommen in den Messdaten sind Signalspuren von Sensoren die zu unterschiedlichen Frequenzen sowohl den Öldruck des Motors, den eingelegten Gang aus dem Getriebe und die Tacho-Geschwindigkeit in sequentiell in den Speicher 115 schreiben. Das Sprung-Scan Verfahren nach Fig. 3 ermöglicht es, dass diese drei verschiedenen Frequenzen und Formate erkannt und jeweils zur parallelen Interpretation an Arbeitseinheiten 135b delegiert werden. Die interpretierten Messdaten werden in der Zwischenspeichereinrichtung 100 in Segmenten 235 abgelegt, welche gemäß Fig. 4 dem adaptiven Downsampling unterworfen und zeitperiodisch abgemischt ("shuffled") sind, so dass nur noch die Änderungen etwa der drei gemeinsam auszuwertenden Signalspuren chronologisch vorliegen. Die Zwischenspeichereinrichtung 100 kann so skaliert werden, dass die Messdaten eines ganzen regionalen Flottenteils auf diese Weise komprimiert gespeichert und analysiert werden können, ohne sie an einer zentralen Stelle ("Flaschenhals") im Rechenzentrum des Fahrzeugherstellers sammeln zu müssen.

Ein Ingenieur am Stammsitz des Fahrzeugherstellers, der die Messdaten der Testflotte auswerten will, kann nun z.B. über einen Browser-Klienten 400 eine Anfrage 260 zunächst an einen zentralen Föderierungsdienst 170 in der Cloud seines Arbeitgebers richten. Denn es ist ihm zunächst unbekannt und letztlich auch gleichgültig, wo auf der Welt sich welcher Prototyp denn gerade aufhält. Ihn interessiert etwa nur die Antwort auf die Frage "Bei welcher Geschwindigkeit und welchem Gang ist der Öldruck über dem Wert XY angestiegen?". Wie in Fig. 8 illustriert, kann der Föderierungsdienst die deklarative Transformation 260 ("when motor.oil_pressure>XY in flotte20 then csv gear.level, vehicle.velocity") an die jeweiligen Zwischenspeichereinrichtungen 100 in den Testregionen über die Datenleitungen 140 weiterleiten (wobei die Flotten-Identifikation etwa durch die Identifikation der in der Region stationierten Fahrzeuge ersetzt wird). Gleichzeitig mischt der Föderierungsdienst die regional berechneten virtuellen Ergebnisdateien 310 (hier: Zeilen des CSV Formats) noch während ihrer Entstehung in einen endgültigen Datenstrom zusammen, der sich im Browser-Client 400 manifestiert und dem Ingenieur rasche Einsichten in Verbesserung und Fehlervermeidung der Prototypen-PKWs ermöglicht. Insofern es sich um Probleme mit der Steuergeräte-Software handelt, lassen sich solche Verbesserungen sogar über die Infrastruktur des Fahrzeugherstellers zeitnah und ferngewartet auf die Prototypen-Fahrzeuge aufspielen und in Nahzeit überwachen.

Addendum

Die Differenz-Operation (analog: Produkt, Division, Potenzierung) auf Multi-Mengen definiert sich wie folgt:

$$\dot{-}_{c1,c2} \colon I^Q \longrightarrow I^{Q'}, \dot{-}_{c1,c2}(I) = \bigcup \dot{-}_{c1,c2}(i \in I)$$

$$\dot{-}_{c1,c2}(i) = \{(c_1 \dot{-} c_2, t_a, t_b,\ m_1 \dot{-} m_2) \mid \forall t_a \leq t \leq t_b \ \exists \ (c_1, t_1, t_2, m_1), (c_2, t_3, t_4, m_2) \in i,$$

so dass

$$\max(t_1, t_3) \leq t \leq \min(t_2, t_4)\}$$

Konstante Nachrichten bzw. künstliche statische Kanäle lassen sich folgendermaßen darstellen:

$$K_m \colon I^Q \longrightarrow I^{Q'}, K_m(I) = \bigcup K_m(i \in I)$$

$$K_m(i) = \{(m, t_a, t_b, m) \mid \forall t_a \leq t \leq t_b \ \exists (c, t_1, t_2, m_1) \in i, \text{ so dass } \max(t_1, t_a) \leq t \leq \min(t_2, t_b)\}$$

Die Boolesche Konjunktion (analog: Diskunktion) definiert sich als:

$$\dot{\&}_{c1,c2} \colon I^Q \longrightarrow I^{Q'}, \dot{\&}_{c1,c2}(I) = \bigcup \dot{\&}_{c1,c2}(i \in I)$$

$$\dot{\&}_{c1,c2}(i) = \{(c_1 \& c_2, t_a, t_b, b) \mid \forall t_a \leq t \leq t_b \ \exists \ (c_1, t_1, t_2, b_1), (c_2, t_3, t_4,\ b_2) \in i$$

mit $b = t \wedge b_1 = t \wedge b_2 = t$ oder $b = f \wedge (b_1 = f \vee b_2 = f)$,
so dass $\max(t_1, t_3) \leq t \leq \min(t_2, t_4)\}$

Die Negation komplettiert die Expressivität auf booleschen Signalspuren:

$$\dot{!}_c \colon I^Q \longrightarrow I^{Q'}, \dot{!}_c(I) = \bigcup \dot{!}_c(i \in I)$$

$\dot{!}_\square(\square) = \{(!\square, \square_\square, \square_\square, b) \mid (\square, \square_a, \square_b, b_1) \ \square \ \square \text{ und } b = t \wedge b_1 = f \text{ oder } b = f \wedge b_1 = t\}$

Eine nicht-punktuelle Variante der Ableitung lässt sich gewinnen, indem die Nachrichtendifferenzen mit der Dauer der Zeit- bzw. Änderungsperioden ins Verhältnis gesetzt werden:

$$\tilde{\partial}_c(i)=\{(\tilde{\partial}c,t_a,t_b,m')|\ \forall t_a\le t\le t_b\ \exists\ (c,t_1,t_2,m_1),(c,t_3,t_4,m_2)\in i$$

mit

$$m'=\frac{m_2\dot{-}m_1}{t_2-t_1}$$

$t_2=t_3$ und , so dass $\max(t_1,t_3)\le t\le\min(t_2,t_4)\}$

Ebenso lässt sich eine zeit-sensitive Integrationsoperation bauen:

$$\tilde{\int}{}^{\varsigma}_c(i)=\{(\int^{\varsigma}c,t_{2n-1},t_{2n},\dot{\Sigma}mj*(t_{2n}-t_1))|\ (c,t_1,t_2,m_1),\ldots,(c,t_{2n-1},t_{2n},m_n)$$

$$\in i\ \text{mit}\ t_{2j}=t_{2j+1}\}$$

$$\Sigma^{\varsigma}c(i)=m,\ \text{so dass}\ (c,t_1,t_2,m)\in\tilde{\int}{}^{\varsigma}_c(i)\ \text{und}\ t_1\ \text{maximal.}$$

$$\int^{\varsigma}_c(I)=\tilde{\int}{}^{\varsigma}_c(i_1)\ \cup\ (\tilde{\int}{}^{\varsigma}_c(i_2)\dot{+}\Sigma^{\varsigma}c(i_1))\ \cup\ldots\cup\ (\tilde{\int}{}^{\varsigma}_c(i_n)\dot{+}\Sigma_{j<n}\ \Sigma^{\varsigma}c(ij))$$

Maxima (Minima, Durchschnitte) berechnet man mittels folgenden Schemas:

$$\widetilde{Max}_c(i)=\{(\text{Max}c,t_{2n-1},t_{2n},m')|\ (c,t_1,t_2,m_1),\ldots,(c,t_{2n-1},t_{2n},m_n)\in i$$

mit

$$t_{2j}=t_{2j+1}\ \text{und}\ m'=\max(m_1,\ldots,m_n)\ \}$$

$\text{Max}c(i)=m,$ so dass $(c,t_1,t_2,m)\in\widetilde{Max}_c(i)$ und $t_1$ maximal.

$$Max_c(I)=\widetilde{Max}_c(i_1)\cup(\max(\widetilde{Max}_c(i_2),\text{Max}c(i_1))\cup\ldots\cup$$

$$(\max(\widetilde{Max}_c(i_n),\ \text{Max}c(i_1),\ \ldots\ ,\ \text{Max}c(i_{n-1}))).$$

Schließlich wollen wir hier auch noch die Zeitverschiebung in die Zukunft (symmetrisch dazu: die Zeitverschiebung in die Vergangenheit) erwähnen. In diesem Falle werden die "überhängigen" Anteile der verschobenen Partitionen jeweils an die folgenden Arbeitseinheiten/Signalspeicher weiterkommuniziert

$$\tilde{\rightsquigarrow}_t(i)=\{(c,t_1+t,\ t_2+t,m)|\ (c,t_1,t_2,m)\in i\}$$

$$\tilde{\rightsquigarrow}^+_t{}_t(i)=\{(c,t_a,\ t_b,m)\in\tilde{\rightsquigarrow}_t(i)\ |\ \forall\ \square_\square\le\square\le\square_\square\ \exists\ (c_1,t_1,t_2,m_1)\in i,$$

so dass $\max(\square_1,\ \square_a)\le\square\le\min(\square_2,\square_b)\}$

$$\tilde{\rightsquigarrow}^-_t{}_t(i)=\tilde{\rightsquigarrow}_t(i)\ /\ \tilde{\rightsquigarrow}^+_t{}_t(i)$$

$$\rightarrow_t(I) = \tilde{\rightarrow}_t^+ t(i_1) \cup (\tilde{\rightarrow}_t^+ t(i_2) \cup \tilde{\rightarrow}_{t\,t}^- (i_1)) \cup \ldots \cup$$

$$(\tilde{\rightarrow}_t \ t(i_n) \cup \tilde{\rightarrow}_{t\,t}^-(i_{n-1}))$$

## Patentansprüche

1. Verfahren zur Verarbeitung von Messdatenmittels einer Rechnereinheitenanordnung,

   wobei zumindest eine Anzahl von drei Rechnereinheiten (135) vorgesehen sind und die Rechnereinheiten mittels zumindest eines Schalters (130, 145) in Datenverbindung stehen,
   wobei eine der Rechnereinheiten als Treiber (135a) eine Steuerungsfunktion ausübt und die zumindest zwei anderen Rechnereinheiten als Arbeitseinheiten (135b) arbeiten,
   wobei der Rechnereinheitenanordnung (125) die Messdaten (200) über einen Datenstrom zur Verfügung gestellt werden und die Messdaten (200) unterschiedliche Datenformate aufweisen,
   **dadurch gekennzeichnet,**
   **dass** der Treiber (135a) die Messdaten (200) hinsichtlich ihrer unterschiedlichen Datenformate analysiert und dadurch Struktur- und/oder Format-Informationen über die Messdaten (200) extrahiert,
   **dass** der Treiber (135a) aus den Struktur- und/oder Format-Informationen einen Abarbeitungsplan (210) der Messdaten (200) erstellt, wobei der Abarbeitungsplan (210) im Hinblick auf die unterschiedlichen Datenformate optimiert wird,
   **dass** die Messdaten (200) gemäß des Abarbeitungsplans (210) in Segmente (220) aufgeteilt und den Arbeitseinheiten (135b) zur parallelen Abarbeitung zugewiesen werden.

2. Verfahren nach Anspruch 1, **dadurch gekennzeichnet, dass** der Abarbeitungsplan die Struktur- und/oder Format-Informationen der jeweiligen Segmente (220) beinhaltet und diese den Arbeitseinheiten zur Verfügung gestellt werden.

3. Verfahren nach einem der vorhergehenden Ansprüche, **dadurch gekennzeichnet, dass** der Treiber (135a) bei insbesondere wechselnden Formaten der Messdaten (200) einen Sprung-Scan ausführt, wobei der Sprung-Scan hierbei unidirektional und/oder bidirektional Bytes überspringt, die innerhalb einer bekannten oder prognostizierten Nutzdaten-Länge ohne Formatwechsel liegen.

4. Verfahren nach einem der vorhergehenden Ansprüche, **dadurch gekennzeichnet, dass** interpretierte Datensegmente (230) einen oder mehrere Datenkanäle aufweisen, wobei jeder Nachricht bzw. jedem Ereignis einer der Datenkanäle ein Zeitstempel zugeordnet ist.

5. Verfahren nach Anspruch 4, **dadurch gekennzeichnet, dass** die interpretierten Datensegmente (230) komprimiert werden, indem jede Arbeitseinheit nur Änderungen von Inhalten der Nachrichten inklusive des zugeordneten Zeitstempels als komprimierte Segmentdatei (250) abspeichert.

6. Verfahren nach Anspruch 5, **dadurch gekennzeichnet, dass** der Treiber (135a) von der Arbeitseinheit (135b) ein Verzeichnis der Kanalgruppen und Zeitintervalle der komprimierten Segmente erhält, die die Arbeitseinheit (135b) bearbeitet hat, worauf ein optimales Verzeichnis (237) und die Ergänzung (236) der Segmentdateien zu einem vollständigen Analyseformat in eine virtuelle Analysedatei koordiniert wird.

7. Verfahren nach Anspruch 6, **dadurch gekennzeichnet, dass** Informationen der virtuellen Analysedatei ausgewertet werden, indem auf den Kanälen Verfeinerungs- und Ausgabeoperatoren, insbesondere Filterungs-, Kombinations-, Ableitungs-, und/oder Integrationsoperationen unter Anwendung von logischen Bedingungen, ausgeführt werden und deren Ergebnisse als virtuelle Messdatei zur Verfügung gestellt werden.

8. Zwischenspeichereinrichtung zur Durchführung eines der vorstehend beschriebene Verfahren nach einem der Ansprüche 1 bis 7, aufweisend

   eine erste Schnittstelle (110) für eine erste Datenleitung (105) zu einem Fahrzeug in dem die Messdaten (200) generiert wurden, wobei diese Messdaten (200) über die erste Schnittstelle (110) von dem Fahrzeug an die Zwischenspeichereinrichtung (100) übertragen werden,
eine Rechnereinheitenanordnung (125), die die Messdaten verarbeitet und/oder gemäß einer Anfrage, insbesondere eines Dienstleisters, aufbereitet,
eine zweite Schnittstelle für eine zweite Datenleitung (140) zu einem zentralen Server, wobei die bearbeiteten Messdaten (200) über die zweite Datenleitung (140) an den zentralen Server weitergeleitet werden.

9. Zwischenspeichereinrichtung nach Anspruch 8, **dadurch gekennzeichnet, dass** die erste Datenleitung (105) und/oder die zweite Datenleitung (140) als eine WIFI und/oder als eine LAN Verbindung ausgebildet ist.

10. Zwischenspeichereinrichtung nach einem der Ansprüche 8 bis 9, **dadurch gekennzeichnet, dass** über die zweite Datenleitung (140) notwendige Kodierungsinformationen und/oder Dekodierungsinformationen zur Verarbeitung der Messdaten (200) von der Rechnereinheitenanordnung (135) der Zwischenspeichereinrichtung (100) abfragbar und übertragbar sind.

**Claims**

1. A method for processing measurement data by means of a computing unit arrangement,

   wherein at least a number of three computing units (135) is provided and the computing units are in data connection by means of at least one switch (130, 145),
   wherein one of the computing units performs a control function as a driver (135a) and the at least two other computing units (135b) operate as work units (135b),
   wherein the computing unit arrangement (125) receives the measurement data (200) via a data stream and the measurement data (200) is in different data formats,
   **characterized in that**
   the driver (135a) analyzes the measurement data (200) in relation to their different data formats and thereby extracts structural and/or format information from the measurement data (200),
   the driver (135a) creates a processing plan (210) for the measurement data (200) based on the structural and/or format information, wherein the processing plan (210) is optimized in relation to the different data formats,
   the measurement data (200) are divided into segments (220) according to the processing plan (210) and assigned to the work units (135b) for parallel processing.

2. The method according to claim 1, **characterized in that** the processing plan contains the structural and/or format information of the respective segments (220) and provides this information to the work units.

3. The method according to any one of the preceding claims, **characterized in that** the driver (135a) performs a jump scan, particularly when the formats of the measurement data (200) change, wherein the jump scan in this case can be unidirectional or bidirectional, skipping bytes within a known or predicted data payload length where no format changes occur.

4. The method according to any one of the preceding claims, **characterized in that** the interpreted data segments (230) have one or more data channels, wherein each message or each event of one of the data channels is assigned a timestamp.

5. The method according to claim 4, **characterized in that** the interpreted data segments (230) are compressed such that each work unit saves only changes in the content of messages, including the assigned timestamp, as a compressed segment file (250) .

6. The method according to claim 5, **characterized in that** the driver (135a) receives from the work unit (135b) a directory of channel groups and time intervals of the compressed segments that the work unit (135b) has processed, whereupon an optimized directory (237) and the integration (236) of the segment files into a complete analysis format are coordinated into a virtual analysis file.

7. The method according to claim 6, **characterized in that** information in the virtual analysis file is evaluated by applying refinement and output operators on the channels, in particular filtering, combination, derivation, and/or integration operations using logical conditions and their results are made available as a virtual measurement file.

8. A buffer device for performing one of the methods described above according to any one of claims 1 to 7, comprising

   a first interface (110) for a first data line (105) to a vehicle in which the measurement data (200) are generated, wherein these measurement data (200) are transmitted from the vehicle to the buffer device (100) via the first interface (110),
   a computing unit arrangement (125) that processes the measurement data and/or prepares them based on a request, in particular from a service provider,
   a second interface for a second data line (140) to a central server, wherein the processed measurement data (200) are transmitted to the central server via the second data line (140).

9. The buffer device according to claim 8, **characterized in that** the first data line (105) and/or the second data line (140) is configured as a WIFI and/or as a LAN connection.

10. The buffer device according to any one of claims 8 to 9, **characterized in that** necessary encoding and/or decoding information for processing the measurement data (200) can be queried and transmitted via the second data line (140) from the computing unit arrangement (135) of the buffer device (100).


**Revendications**

1. Procédé de traitement de données de mesure à l'aide d'un agencement d'unité informatique,

   dans lequel un nombre d'au moins trois unités informatiques (135) sont prévues et les unités informatiques sont en connexion de données au moyen d'au moins un commutateur (130, 145),
   dans lequel une des unités informatiques remplit une fonction de commande en faisant office de pilote (135a) et les au moins deux autres unités informatiques fonctionnent comme des unités de travail (135b),
   dans lequel les données de mesure (200) sont mises à la disposition de l'agencement d'unité informatique (125) via un flux de données et les données de mesure (200) présentent des formats de données différents,
   **caractérisé en ce que**
   le pilote (135a) analyse les données de mesure (200) au regard de leurs différents formats de données et extrait ainsi des informations de structure et/ou de format relatives aux données de mesure (200), **en ce que**
   le pilote (135a) crée un plan de traitement (210) des données de mesure (200) à partir des informations de structure et/ou de format, dans lequel le plan de traitement (210) est optimisé au regard des différents formats de données, **en ce que**
   les données de mesure (200) sont divisées en segments (220) selon le plan de traitement (210) et sont attribuées aux unités de travail (135b) en vue d'un traitement parallèle.

2. Procédé selon la revendication 1, **caractérisé en ce que** le plan de traitement contient les informations de structure et/ou de format des segments respectifs (220) et celles-ci sont mises à la disposition des unités de travail.

3. Procédé selon une des revendications précédentes, **caractérisé en ce que** le pilote (135a) effectue un saut de balayage lorsque les formats des données de mesure (200) changent, dans lequel le saut de balayage saute ici de manière unidirectionnelle et/ou bidirectionnelle des octets, qui se situent à l'intérieur d'une longueur de données d'utilisateur connue ou prévue sans changement de format.

4. Procédé selon une des revendications précédentes, **caractérisé en ce que** les segments de données interprétés (230) comportent un ou plusieurs canaux de données, dans lequel chaque message ou chaque événement d'un des canaux de données se voit attribuer un horodatage.

5. Procédé selon la revendication 4, **caractérisé en ce que** les segments de données interprétés (230) sont compressés, du fait que chaque unité de travail enregistre uniquement les modifications apportées au contenu des messages, y compris l'horodatage attribué, sous la forme d'un fichier de segment compressé (250).

6. Procédé selon la revendication 5, **caractérisé en ce que** le pilote (135a) depuis l'unité de travail (135b) obtient un répertoire des groupes de canaux et intervalles de temps des segments compressés, que l'unité de travail (135b) a traité, après quoi un répertoire optimal (237) et l'ajout (236) des fichiers de segments à un format d'analyse complet dans un fichier d'analyse virtuel sont coordonnés.

**7.** Procédé selon la revendication 6, **caractérisé en ce que** les informations du fichier d'analyse virtuelle sont évaluées, **en ce que** sur les canaux des opérations de raffinement et de sortie, notamment des opérations de filtrage, de combinaison, de dérivation et/ou d'intégration sont réalisées dans des conditions logiques et leurs résultats sont mis à disposition sous forme de fichier de mesure virtuel.

**8.** Dispositif de mémoire tampon pour la mise en œuvre d'un procédé décrit ci-dessus selon une des revendications 1 à 7, présentant

une première interface (110) pour une première ligne de données (105) vers un véhicule dans lequel les données de mesure (200) ont été générées, dans lequel ces données de mesure (200) sont transmises via la première interface (110) depuis le véhicule au dispositif de mémoire tampon (100),
un dispositif d'unité informatique (125), qui traite les données de mesure et/ou selon une demande, en particulier d'un fournisseur de services,
une deuxième interface pour une deuxième ligne de données (140) vers un serveur central, dans lequel les données de mesure traitées (200) sont transmises au serveur central via la deuxième ligne de données (140).

**9.** Dispositif de mémoire tampon selon la revendication 8, **caractérisé en ce que** la première ligne de données (105) et/ou la deuxième ligne de données (140) est conçue comme une connexion WIFI et/ou comme une connexion LAN.

**10.** Dispositif de mémoire tampon selon une des revendications 8 à 9, **caractérisé en ce que**, via la deuxième ligne de données (140), des informations de codage et/ou des informations de décodage pour le traitement des données de mesure (200) peuvent être interrogées et transférées par l'agencement d'unité informatique (135) du dispositif de mémoire tampon (100).

Fig. 1

135

**Signal Processing Device**

LAN ———145

147

155— Index z.B. SSD | CPU | Cache z.B. RAM ——160

Storage z.B. Tape ———150

SAN

130—

# Fig. 1b

**Fig. 2**

Fig. 3

PowerTrain_20160921.MDF
- ID Block [MDF 3.10]
- Header Block
  - Text Block
  - Data Group 1
    - Data
    - Channel Group 1
  - Data Group 2
  - Data Group 3
    - Data
    - Channel Group 1
  - Data Group 4
  - Data Group 5
  - Data Group 6
    - Data
    - Channel Group 1
      - Text Block
      - EngRPM
      - AddPwrCnsmr_On_Rq
      - CRC_Eng_Rs_EngCtrl
      - EngRPM_Sens_LHOM
      - EngRun_Stat
      - EngTrq
      - OFC_Stat_PT
      - Rsrv2_Eng_Rs_EngCt
      - SQC_Eng_Rs_EngCtrl
      - EngStyle
      - EngTrqMaxComFctr
      - EngTrqLmtd_Misfire
      - t
  - Data Group 7
  - Data Group 8
  - Data Group 9
  - Data Group 10
  - Data Group 11

PowerTrain_20160921.MDF\Header Block\Data Group 6\Data

| Name | Type | Description | Value | Bytes | Error Message |
|------|------|-------------|-------|-------|---------------|
| link | LINK | Start Address | 0x12EFDD4 | 0 | |
| length | WORD | Block Length | 535249 | 0 | |

Hex View

Bytes of node 'Data':

```
0x00 0x00 0x00 0x00 ' ?' ' ¿' ' §' ' A'
0x0E 0x04 0x00 ' ?' 0x04 ' ?' 0x07 0x00
0x06 ' ?' ' }' 0x00 0x00 0x00 ' ?' 0x7F
' ?' ' g' ' A' 0x0D 0x04 0x00 ' ?' 0x04
' ?' 0x07 0x00 0x07 ' ?' ' }' 0x00 0x00
0x00 0x10 ' ?' ' i' ' u' ' A' 0x0E 0x04
0x00 ' )' 0x04 0x0C 0x08 0x00 0x08 ' ?'
' }' 0x00 0x00 0x00 ' ?' ' ?' ' ?' ' ~'
' A' 0x0E 0x04 0x00 ' 9' 0x04 ' ' 0x08
0x00 0x09 ' ?' ' }' 0x00 0x00 0x00 ' ?'
' ?' 0x15 ' ?' ' A' 0x0E 0x04 0x00 ' ?'
0x04 ' ¿' 0x08 0x00 0x0A ' ?' ' }' 0x00
0x00 0x00 ' ?' ' ?' ' §' ' ?' ' A' 0x10
0x04 0x00 ' ?' 0x04 ' H' 0x08 0x00 0x0B
' ?' ' }' 0x00 0x00 0x00 0x18 ' g' ' ?'
' ?' ' A' 0x13 0x04 0x00 ' ?' 0x04 ' X'
0x08 0x00 0x0C ' ?' ' }' 0x00 0x00 0x00
' p' ' ?' ' ` ' ' ?' ' A' 0x17 0x04 0x00
' ?' 0x04 ' f' 0x08 0x00 0x0D ' ?' ' }'
0x00 0x00 0x00 ' ¿' ' ?' ' ?' ' ?' ' A'
0x1D 0x04 0x00 ' S' 0x04 ' q' 0x08 0x00
0x0E ' ?' ' }' 0x00 0x00 0x00 ' ?' ' ?'
' ¿' ' ?' ' A' ' !' 0x04 0x00 ' S' 0x04
' ~' 0x08 0x00 0x0F ' ?' ' }' 0x00 0x00
0x00 ' ?' ' ?' ' p' ' ?' ' A' ' ~' 0x04
0x00 ' p' 0x04 ' ?' 0x08 0x00 0x00 ' ?'
' }' 0x00 0x00 0x00 ' h' ' m' ' ?' ' ?'
```

# Fig. 3b

EP 3 831 035 B1

Fig. 4

Fig. 5

Fig. 6

Fig. 7

Fig. 8

EP 3 831 035 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *A Guide to the SQL standard: a users guide to the standard database language SQL*, 1997
- *ORC - the smallest, fastest columnar storage for Hadoop workloads*, 2018
- *Parquet - Big Data Concepts, Theories, and Applications*, 2016
- **KALMAN-FILTER**. *A New Approach to Linear Filtering and Prediction Problems*, 1960
- *Elektronik in der Fahrzeugtechnik*, 2010
- **A. A. MUNSHI** ; **Y. A. I. MOHAMED**. Cloud-based visual analytics for smart grids big data. *2016 IEEE Power & Energy Society Innovative Smart Grid Technologies Conference (ISGT), Minneapolis, MN, USA*, 2016, 1-5